# EUROPEAN PATENT SPECIFICATION

(11) **EP 4 354 696 B1**
(45) Date of publication and mention of the grant of the patent: **25.02.2026**
(21) Application number: 23744656.2
(22) Date of filing: 23.06.2023
(51) Int. Cl.: H02J 7/00, G06F 1/16, G02B 27/01, G02C 11/00, G06F 1/26

(54) **WEARABLE ELECTRONIC DEVICE**
TRAGBARE ELEKTRONISCHE VORRICHTUNG
DISPOSITIF ÉLECTRONIQUE POUVANT ÊTRE PORTÉ

(30) Priority: 01.09.2022 KR 20220110690; 05.10.2022 KR 20220126838
(43) Date of publication of application: 17.04.2024
(73) Proprietor: Samsung Electronics Co., Ltd., Suwon-si, Gyeonggi-do 16677 (KR)
(72) Inventor: KIM, Wook, Gyeonggi-do 16677 (KR); YOON, Jongmin, Gyeonggi-do 16677 (KR)
(74) Representative: HGF
(86) International application number: PCT/KR2023/008744
(87) International publication number: WO 2024/048937

(56) References cited:
- WO-A1-2021/233907
- CN-A- 114 545 623
- JP-A- 2015 202 198
- KR-A- 20220 032 797
- KR-B1- 102 113 287
- US-A1- 2019 033 622
- US-B2- 10 938 151

## Description

### BACKGROUND

### 1. Field

The disclosure relates to a wearable electronic device.

### 2. Description of Related Art

A wearable electronic device for providing an augmented reality (AR) service has been introduced to the market. An AR service is a service of superimposing a virtual image having supplementary information on a real-world image seen by a user and showing the superimposition result, and may provide a user with a virtual object image including content related to a real object identified from the real-world image. An electronic device providing an AR service may operate while worn by a user. For example, wearable electronic devices may include a glasses-type electronic device that is mounted on the head of a user.

The aforementioned information may be provided as related arts to help understanding of the present disclosure. No claim or determination is proposed as to whether any of the aforementioned descriptions may be applied as a prior art in association with the present disclosure.

US 20190033622A1 discloses, according to its abstract, apparatuses and systems for wearable devices, such as eyewear. According to one example, the wearable device includes a frame, onboard electronics components, and an antenna disposed around an eyepiece area of the frame that is configured to hold an optical element. The antenna is configured for inductive coupling. In some examples, a switch coupled to the antenna allows selection between circuitry for inductive charging of a battery and near-field communication (NFC) circuitry for communicating data via the antenna.

### SUMMARY

The scope of the present invention is determined according to the independent claim. Various embodiments of the present invention are outlined in the dependent claims.

Also disclosed herein is that a wearable electronic device 400, 500, or 600 includes a housing 410, 510, or 610 including a front 411, 511, or 611 to which at least one lens is connected and a first temple 412, 512, or 612 and a second temple 413, 513, or 613 which are rotatably connected to both sides of the front 411, 511, or 611, respectively, a battery 420, 520, or 620 provided inside the housing 410, 510, or 610, and a charge controller 430, 530, or 630 configured to control charging of the battery 420, 520, or 620. The charge controller 430, 530, or 630 is configured to, when the first temple 412, 512, or 612 and the second temple 413, 513, or 613 are unfolded relative to the front 411, 511, or 611, charge the battery 420, 520, or 620 through a first charging path CP1_b, CP3_b, or CP5_b. The charge controller 430, 530, or 630 is configured to, when the first temple 412, 512, or 612 and the second temple 413, 513, or 613 are folded relative to the front 411, 511, or 611, charge the battery 420, 520, or 620 through a second charging path CP2_b, CP4_b, or CP6_b that is different from the first charging path CP1_b, CP3_b, or CP5_b. At least when the wearable electronic device 400 is in a folded state, a charging time may decrease and heat generated during charging may decrease.

Also disclosed herein is that a charging system 700 includes a wearable electronic device 800, and a case 900 in which the wearable electronic device 800 is accommodated. The wearable electronic device 800 includes a housing 810 including a front 811 to which at least one lens is connected and a first temple 812 and a second temple 813 which are rotatably connected to both sides of the front 811, respectively, a battery 820 provided inside the housing 810, and a charge controller 830 configured to control charging of the battery 820, and a first terminal 840 positioned on the first temple 812 and a second terminal 850 positioned on the second temple 813. The case 900 includes a case body 910 forming a space 911 in which the wearable electronic device 800 is accommodated, and a contact pad 920 formed in the case body 910 and electrically contacting the first terminal 840 and the second terminal 850 when the wearable electronic device 800 is accommodated in the case 900. The charge controller 830 is configured to, when the wearable electronic device 800 is not accommodated in the case 900, charge the battery 820 through a first charging path CP7_b. The charge controller 830 is configured to, when the wearable electronic device 800 is accommodated in the case 900, charge the battery 820 through a second charging path CP8_b that is different from the first charging path CP7_b. At least when the wearable electronic device 800 is accommodated in the case 900, a charging time may decrease and heat generated during charging may decrease.

Also disclosed herein is that the effects of the wearable electronic device and the charging system, including the same, may not be limited to the above-mentioned effects, and other unmentioned effects may be clearly understood from the following description by one of ordinary skill in the art.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram of an electronic device in a network environment according to an embodiment;
FIG. 2 is a view illustrating a structure of a wearable electronic device according to an embodiment;
FIG. 3 is a diagram illustrating an operation of an eye tracking camera included in a wearable electronic device according to an embodiment;
FIG. 4A is a schematic perspective view of a charging path of a wearable electronic device in an unfolded state according to an embodiment;
FIG. 4B is a plan view of an internal configuration of the wearable electronic device in an unfolded state according to an embodiment;
FIG. 4C is a schematic rear view of a charging path of the wearable electronic device in a folded state according to an embodiment;
FIG. 4D is a block diagram of a first charging path for charging a battery when the wearable electronic device is in an unfolded state;
FIG. 4E is a schematic view of total resistance of the first charging path for charging a battery when the wearable electronic device is in an unfolded state;
FIG. 4F is a block diagram of a second charging path for charging a battery when the wearable electronic device is in a folded state;
FIG. 4G is a schematic view of total resistance of the second charging path for charging 4 a battery when the wearable electronic device is in a folded state;
FIG. 5A is a schematic perspective view of a charging path of a wearable electronic device in an unfolded state according to an embodiment;
FIG. 5B is a schematic rear view of a charging path of the wearable electronic device in a folded state according to an embodiment;
FIG. 6A is a schematic perspective view of a charging path of a wearable electronic device in an unfolded state according to an embodiment;
FIG. 6B is a schematic rear view of a charging path of the wearable electronic device in a folded state according to an embodiment;
FIG. 7A is a bottom view of a folded state of a wearable electronic device according to an embodiment;
FIG. 7B is a front view of a case according to an embodiment; and
FIG. 7C is a front view of the wearable electronic device accommodated in the case according to an embodiment.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted. In the following description, although numerous features may be designated as optional, it is nevertheless acknowledged that all features defined by claim 1 are not to be read as optional.

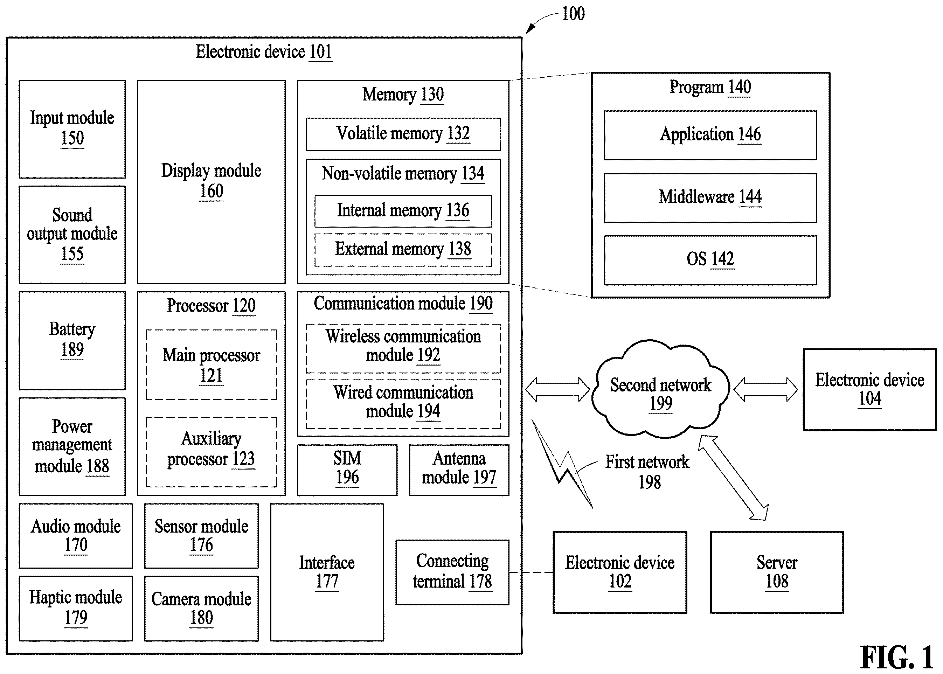

FIG. 1 is a block diagram illustrating an electronic device 101 in a network environment 100 according to various example embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to one embodiment, the electronic device 101 may communicate with the electronic device 104 via the server 108. According to one embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to one embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to one embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to one embodiment, the auxiliary processor 123 (e.g., an ISP or a CP) may be implemented as a portion of another component (e.g., the camera module 180 or the communication module 190) that is functionally related to the auxiliary processor 123. According to one embodiment, the auxiliary processor 123 (e.g., an NPU) may include a hardware structure specified for artificial intelligence (AI) model processing. An AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to one embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to one embodiment, the display device 160 may include a touch sensor adapted to sense a touch, or a pressure sensor adapted to measure an intensity of a force incurred by the touch.

The audio module 170 may convert a sound into an electric signal or vice versa. According to one embodiment, the audio module 170 may obtain the sound via the input device 150 or output the sound via the sound output device 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to one embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to one embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to one embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to one embodiment, the haptic module 179 may include, for example, a motor, a piezoelectric element, or an electric stimulator.

The camera module 180 may capture a still image and moving images. According to one embodiment, the camera module 180 may include one or more lenses, image sensors, ISPs, or flashes.

The power management module 188 may manage power supplied to the electronic device 101. According to one embodiment, the power management module 188 may be implemented as, for example, at least a part of a power management integrated circuit (PMIC).

The battery 189 may supply power to at least one component of the electronic device 101. According to one embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an example embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to one embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to one embodiment, the antenna module 197 may include an antenna including a radiating element including a conductive material or a conductive pattern formed in or on a substrate (e.g., a printed circuit board (PCB)). According to one embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to one embodiment, another component (e.g., a radio frequency integrated circuit (RFIC)) other than the radiating element may be additionally formed as a part of the antenna module 197.

According to one embodiment, the antenna module 197 may form a mmWave antenna module. According to an example embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to one embodiment, all or some of operations to be executed by the electronic device 101 may be executed at one or more of the external electronic devices 102, 104, and 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an example embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

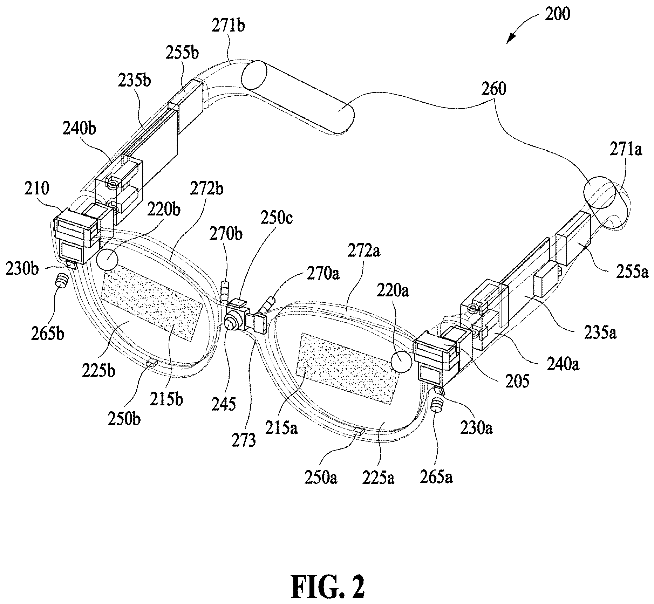

FIG. 2 is a view illustrating a structure of a wearable electronic device 200 according to an embodiment.

Referring to FIG. 2, the wearable electronic device 200 (e.g., the electronic device 101 or 102 of FIG. 1) may be worn on a face of a user to provide the user with an image associated with an augmented reality (AR) service and/or a virtual reality (VR) service.

In an embodiment, the wearable electronic device 200 may include a first display 205, a second display 210, screen display portions 215a and 215b, input optical members 220a and 220b, a first transparent member 225a, a second transparent member 225b, lighting units 230a and 230b, a first board 235a, a second board 235b, a first hinge 240a, a second hinge 240b, an imaging camera 245, a plurality of microphones (e.g., a first microphone 250a, a second microphone 250b, and a third microphone 250c), a plurality of speakers (e.g., a first speaker 255a, and a second speaker 255b), a battery 260, a first recognition camera 265a, a second recognition camera 265b, a first eye detection camera 270a, a second eye detection camera 270b, temples 271a and 271b, rims 272a and 272b, and a bridge 273.

In an embodiment, a display (e.g., the first display 205 and the second display 210) may include, for example, a liquid crystal display (LCD), a digital mirror device (DMD), or a liquid crystal on silicon (LCoS), a light-emitting diode on silicon (LEDoS), an organic light-emitting diode (OLED), a micro light-emitting diode (micro LED), or the like. Although not shown in the drawings, when the display 205, 210 is one of an LCD, a DMD, and an LCoS, the wearable electronic device 200 may include a light source configured to emit light to a screen output area of the display 205, 210. In an embodiment, when the display 205, 210 is capable of generating light by itself, for example, when the display 205, 210 is either an OLED or a micro-LED, the wearable electronic device 200 may provide a virtual image with a relatively high quality to the user even though a separate light source is not included. For example, when the display 205, 210 is implemented as an OLED or a micro-LED, a light source may be unnecessary, and accordingly, the wearable electronic device 200 may be lightened. Hereinafter, the display 205, 210 capable of generating light by itself may be referred to as a "self-luminous display", and description will be made on the assumption of the self-luminous display.

The display 205, 210 according to various embodiments may include at least one micro-LED. For example, the micro-LED may express red (R), green (G), and blue (B) by emitting light by itself and because of its small size (e.g., less than or equal to 100 µm), a single chip may implement a single pixel (e.g., one of R, G, and B). Accordingly, it may be possible to provide a high resolution without a backlight unit (BLU), when the display 205, 210 is implemented as a micro-LED. However, the example is not limited thereto. A single pixel may include R, G, and B and a single chip may be implemented by a plurality of pixels including R, G, and B. The display 205, 210 may also be referred to as a "light source".

In an embodiment, the display 205, 210 may include pixels for displaying a virtual image. The display 205, 210 may further include infrared pixels that emit infrared light.

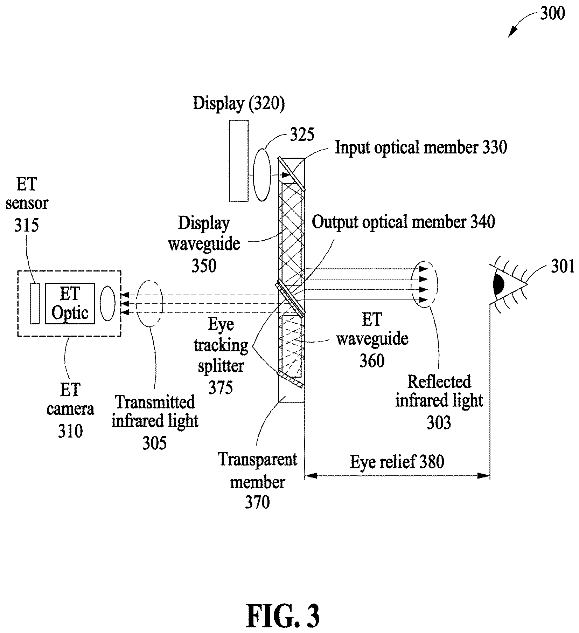

In an embodiment, the display 205, 210 may further include light-receiving pixels (e.g., photo sensor pixels) that are disposed between pixels and configured to receive light reflected from eyes of a user, convert the received light to electrical energy, and output the electrical energy. A light-receiving pixel may be referred to as an "eye tracking sensor". The eye tracking sensor (e.g., an eye tracking sensor 315 of FIG. 3) may sense infrared light generated by reflecting light emitted by an infrared pixel included in the display 205, 210 by eyes of a user.

The wearable electronic device 200 may detect a gaze direction (e.g., a movement of a pupil) of the user, using light receiving pixels 315. For example, the wearable electronic device 200 may detect and track a gaze direction of a left eye and a gaze direction of a right eye of the user through one or more light-receiving pixels 315 of the first display 205 and one or more light-receiving pixels 315 of the second display 210. The wearable electronic device 200 may also determine a central position of a virtual image according to the gaze directions of the left eye and the right eye of the user (e.g., directions in which pupils of the left eye and the right eye of the user gaze) detected through the one or more light-receiving pixels 315.

The wearable electronic device 200 may include the display 205, 210, the first transparent member 225a and/or the second transparent member 225b. A user may use the wearable electronic device 200 while wearing the wearable electronic device 200 on his or her face. According to an embodiment, the first transparent member 225a may be disposed to face the left eye of the user, and the second transparent member 225b may be disposed to face the right eye of the user. According to various embodiments, when the display 205, 210 is transparent, the display 205, 210 may be disposed to face an eye of the user to configure the screen display portion 215a, 215b.

The first display 205 and the second display 210 may each include a first control circuit (not shown). The first control circuit may control the first display 205 or the second display 210. The first control circuit may control an operation of a liquid crystal element of a transparent cover (not shown) included in the first display 205 or the second display 210. In an embodiment, light emitted from the display 205, 210 may reach the screen display portion 215a formed on the first transparent member 225a that faces the left eye of the user, and the screen display portion 215b formed on the second transparent member 225b that faces the right eye of the user, by passing through a lens (not shown) and a waveguide (e.g., a display waveguide 350 and an eye tracking waveguide 360 of FIG. 3).

The lens (not shown) may be disposed in front of the display 205, 210. The lens (not shown) may include a concave lens and/or a convex lens. For example, the lens (not shown) may include a projection lens (e.g., a projection lens 325 of FIG. 3), or a collimation lens (not shown).

In an embodiment, the light emitted from the display 205, 210 may be guided by the waveguide 350, 360 through the input optical member 220a, 220b. Light traveling in the waveguide 350, 360 may be guided toward the eyes of the user through the output optical member (e.g., the output optical member 340 of FIG. 3). The screen display portion 215a, 215b may be determined based on light emitted toward an eye of a user (e.g., an eye 301 of the user of FIG. 3).

For example, the light emitted from the display 205, 210 may be reflected from a grating area of the waveguide 350, 360 formed in the input optical member 220a, 220b and the screen display portion 215a, 215b, and may be transmitted to the eye 301 of the user.

In an embodiment, the screen display portion 215a, 215b or a transparent member (e.g., the first transparent member 225a, the second transparent member 225b) may include a reflective lens, and a lens including the waveguide 350, 360. The waveguide 350, 360 may function to transmit a light source generated by the display 205, 210 to an eye of the user, and may be referred to as an "optical waveguide". Hereinafter, an "optical waveguide" or "waveguide" may correspond to the screen display portion 215a, 215b.

The screen display portion 215a, 215b may be a path through which external light is incident, totally reflected, and emitted, and may be distinguished from the first transparent member 225a and the second transparent member 225b through which external light is simply reflected or transmitted.

In an embodiment, the screen display portion 215a, 215b may be formed of glass, plastic, or a polymer, and may have a nanopattern formed on one surface of the inside or outside, for example, a grating structure of a polygonal or curved shape. According to an embodiment, light incident to one end of the screen display portion 215a, 215b through the input optical member 220a, 220b may be propagated inside the display waveguide 350 by the nanopattern to be provided to the user. For example, the screen display portion 215a, 215b including a freeform prism may provide incident light to a user through a reflection mirror.

The screen display portion 215a, 215b may include at least one of a reflective element (e.g., a reflection mirror) and at least one diffractive element (e.g., a diffractive optical element (DOE) or a holographic optical element (HOE)). The screen display portion 215a, 215b may guide light emitted from a display (e.g., the first display 205 and the second display 210) to the eyes of the user, using the at least one diffractive element or the reflective element included in the screen display portion 215a, 215b.

According to various embodiments, the diffractive element may include the input optical member 220a, 220b and/or an output optical member (e.g., the output optical member 340 of FIG. 3). For example, the input optical member 220a, 220b may refer to an input grating area, and the output optical member 340 may refer to an output grating area. The input grating area may function as an input terminal to diffract (or reflect) light output from the display 205, 210 (e.g., a micro LED) to transmit the light to the screen display portion 215a, 215b. The output grating area may function as an exit to diffract (or reflect) light transmitted to the waveguide 350, 360 to the eye 301 of the user.

According to various embodiments, the reflective element may include a total reflection optical element or a total reflection waveguide for total internal reflection (TIR). For example, total reflection, which is one of schemes of inducing light, may form an angle of incidence such that light (e.g., a virtual image) entering through an input grating area is completely or almost completely reflected from one portion (e.g., a specific surface) of the screen display portion 215a, 215b, to completely or almost completely transmit the light to an output grating area.

The first transparent member 225a and/or the second transparent member 225b may be formed as, for example, a glass plate, a plastic plate, or a polymer, and may be transparently or translucently formed. According to an embodiment, the first transparent member 225a may be disposed to face the left eye of the user, and the second transparent member 225b may be disposed to face the right eye of the user.

The lighting unit 230a, 230b may be used differently according to the position in which the lighting unit 230a, 230b is attached. For example, the lighting unit 230a, 230b may be attached in the vicinity of the rim 272a, 272b of the wearable electronic device 200. The lighting unit 230a, 230b may be used as an auxiliary device for facilitating eye-gaze detection when pupils are captured using the eye tracking camera 270a, 270b. The lighting unit 230a, 230b may use an IR LED with a visible light wavelength or an infrared light wavelength.

Alternatively, the lighting unit 230a, 230b may be attached in the vicinity of a hinge (e.g., the first hinge 240a, the second hinge 240b) connecting the rim 272a, 272b and a temple 271a, 271b corresponding to a leg portion of glasses of the wearable electronic device 200 or in the vicinity of a camera (e.g., the first recognition camera 265a, the second recognition camera 265b) mounted adjacent to the bridge 273 connecting the rims 272a and 272b. Here, the camera 265a, 265b may be, for example, a global shutter (GS) camera, but is not limited thereto.

If capturing is performed using a global shutter (GS) camera, the lighting unit 230a, 230b may be used to supplement a surrounding brightness. For example, the lighting unit 230a, 230b may be used in a dark environment or when it is not easy to detect a subject to be captured due to reflected light and mixing of various light sources.

In an embodiment, the lighting unit 230a, 230b may also be omitted. The lighting unit 230a, 230b may be replaced by infrared pixels included in the first display 205, the second display 210. In an embodiment, the lighting unit 230a, 230b may be included in the wearable electronic device 200 to assist infrared pixels included in the first display 205, the second display 210.

A PCB (e.g., the first board 235a, the second board 235b) may be disposed in the temple 271a, 271b of the wearable electronic device 200, and transmit an electrical signal to each module (e.g., a camera, a display, an audio, or a sensor) and another PCB through a flexible printed circuit board (FPCB). According to various embodiments, at least one PCB may include the first board 235a, the second board 235b, and an interposer (not shown) disposed between the first board 235a and the second board 235b.

In an embodiment, a control circuit (not shown) for controlling components of the wearable electronic device 200 other than the first display 205, the second display 210 may be positioned on a PCB (e.g., the first board 235a, the second board 235b). The control circuit may control the components other than the first display 205, the second display 210 and perform an operation such as depth value estimation. The control circuit may include a communication circuit (e.g., the communication module 190 of FIG. 1) or a memory (e.g., the memory 130 of FIG. 1). The control circuit may control the first display 205, the second display 210, and/or the other components.

The hinge 240a, 240b may correspond to a portion connecting the temple 271a, 271b and the rim 272a, 272b of the wearable electronic device 200.

In an embodiment, the imaging camera 245 may be referred to as a "high resolution (HR)" or a "photo video (PV)", and may include a high-resolution camera. The imaging camera 245 may include a color camera having functions for obtaining a high-quality image, such as an automatic focus (AF) function and an optical image stabilizer (OIS). Embodiments are not limited thereto, and the imaging camera 245 may include a GS camera or a rolling shutter (RS) camera.

In an embodiment, a plurality of microphones (e.g., the first microphone 250a, the second microphone 250b, and the third microphone 250c) may process an external acoustic signal into electrical audio data. The processed audio data may be variously utilized according to a function (or an application being executed) being performed by the wearable electronic device 200.

In an embodiment, a plurality of speakers (e.g., the first speaker 255a and the second speaker 255b) may output audio data that is received from a communication circuit (e.g., the communication module 190 of FIG. 1) or stored in a memory (e.g., the memory 130 of FIG. 1).

In an embodiment, one or more batteries 260 may be included, and may supply power to the components constituting the wearable electronic device 200.

In an embodiment, the first recognition camera 265a and the second recognition camera 265b may include cameras used for three degrees of freedom (3DoF) and six degrees of freedom (6DoF) head tracking, hand detection and tracking, and gesture and/or space recognition. For example, the first recognition camera 265a and the second recognition camera 265b may each include a GS camera to detect a movement of a head or a hand and track the movement. For example, a stereo camera may be used for head tracking and space recognition, and accordingly, two GS cameras with the same standard and performance may be used. An RS camera may be used to detect a quick hand movement and a minute movement of a finger and track a movement. In an embodiment, a GS camera having superior performance (e.g., image drag) in comparison to a camera may be mainly used. However, embodiments are not limited thereto. According to various embodiments, an RS camera may also be used. The first recognition camera 265a and the second recognition camera 265b may perform a simultaneous localization and mapping (SLAM) function through depth capturing and spatial recognition for 6DoF. In addition, the first recognition camera 265a and the second recognition camera 265b may perform a user gesture recognition function.

In an embodiment, at least one sensor (not shown, e.g., a gyro sensor, an acceleration sensor, a geomagnetic sensor, and/or a gesture sensor), the first recognition camera 265a, and the second recognition camera 265b may perform at least one of head tracking for 6DoF, pose estimation and prediction, gesture and/or space recognition, and a function of a SLAM through depth imaging.

In an embodiment, the first recognition camera 265a and the second recognition camera 265b may be classified and used as a camera for head tracking and a camera for hand tracking.

In an embodiment, the first eye tracking camera 270a and the second eye tracking camera 270b may detect and track pupils. The first eye tracking camera 270a and the second eye tracking camera 270b may be used so that the center of a virtual image projected on the wearable electronic device 200 may be positioned according to the gaze directions of the pupils of a user wearing the wearable electronic device 200. For example, as the first eye tracking camera 270a and the second eye tracking camera 270b, a GS camera may be mainly used to detect a pupil and track a fast pupil movement. The first eye tracking camera 270a may be installed to correspond to the left eye of the user, and the second eye tracking camera 270b may be installed to correspond to the right eye of the user. Here, the first eye tracking camera 270a and the second eye tracking camera 270b may have the same camera performance and specifications. However, embodiments are not limited thereto. The operation of an eye tracking camera (e.g., the first eye tracking camera 270a, the second eye tracking camera 270b) will be described in more detail with reference to FIG. 3 below.

FIG. 3 is a diagram illustrating an operation of an eye tracking camera included in a wearable electronic device 300 according to an embodiment. FIG. 3 illustrates a process in which an eye tracking camera (ET camera) 310 (e.g., the first eye tracking camera 270a, the second eye tracking camera 270b of FIG. 2) of the wearable electronic device 300 according to an embodiment tracks the eye 301 of the user, that is, a gaze of the user, using light (e.g., infrared light) output from a display 320 (e.g., the first display 205, the second display 210 of FIG. 2).

The eye tracking camera 310 may include the eye tracking sensor (ET sensor) 315. The eye tracking sensor 315 may be included inside the eye tracking camera 310. The eye tracking sensor 315 may detect first reflected light that is generated when reflected infrared light 303 is reflected from the eye 301 of the user. The eye tracking camera 310 may track the eye 301 of the user, that is, the gaze of the user, based on a detection result of the eye tracking sensor 315.

The display 320 may include a plurality of visible light pixels and a plurality of infrared pixels. The visible light pixels may include R, G, and B pixels. The visible light pixels may output visible light corresponding to a virtual object image. The infrared pixels may output infrared light. The display 320 may include, for example, micro LEDs, or OLEDs.

The wearable electronic device 300 may perform gaze tracking using the infrared light output from the display 320. The projection lens 325 may be disposed between the display 320 and an input optical member 330 (e.g., the input optical member 220a, 220b of FIG. 2).

The infrared light output from the display 320 may be incident on the input optical member 330 through the projection lens 325, and may be separated into the reflected infrared light 303 and transmitted infrared light 305 by a half mirror (not shown) included in the input optical member 330.

The half mirror may be formed in the entire area or a partial area of the input optical member 330. When the half mirror is formed in the entire area of the input optical member 330, the input optical member 330 may also be referred to as a "half mirror". The half mirror may be disposed in the input optical member 330 of the display waveguide 350. The half mirror may be disposed inside or below the input optical member 330. The half mirror may include a grating structure.

The half mirror may output reflected infrared light and transmitted infrared light in response to the infrared light output from the display 320. The half mirror may include a grating structure. The grating structure may output reflected infrared light directly toward the eye 301 of the user by reflecting a portion of the output infrared light, or may output the reflected infrared light 303 toward the eye 301 of the user through the output optical member 340 by passing through the display waveguide 350. Also, the grating structure may output the transmitted infrared light 305 by transmitting another portion of the output infrared light.

The reflected infrared light 303 may be output directly toward the eye 301 of the user. The reflected infrared light 303 may be output toward the eye 301 of the user through the output optical member 340 by passing through the display waveguide 350. The transmitted infrared light 305 may be output toward the real world. The transmitted infrared light 305 may be incident on a real object and may be partially reflected from the real object.

The display waveguide 350 and the eye tracking waveguide 360 may be included in a transparent member 370 (e.g., the first transparent member 225a, the second transparent member 225b of FIG. 2). The transparent member 370 may be formed as, for example, a glass plate, a plastic plate, or a polymer, and may be transparently or translucently formed. The transparent member 370 may be disposed to face an eye of a user. **In** this case, a distance between the transparent member 370 and the eye 301 of the user may be referred to as an "eye relief" 380.

The transparent member 370 may include the waveguides 350 and 360. The transparent member 370 may include the input optical member 330 and the output optical member 340. In addition, the transparent member 370 may include an eye tracking splitter 375 that splits the input light into several waveguides.

The display waveguide 350 is separate from the input optical member 330 as shown in FIG. 3. However, embodiments are not limited thereto. The input optical member 330 may also be included in the display waveguide 350.

In addition, the output optical member 340 is separate from the eye tracking waveguide 360 as shown in FIG. 3. However, embodiments are not limited thereto. The output optical member 340 may also be included in the eye tracking waveguide 360.

An optical waveguide (e.g., the display waveguide 350, the eye tracking waveguide 360) may output a virtual object image by adjusting a path of visible light. Visible light and infrared light output from the display 320 may be incident on the input optical member 330 through the projection lens 325. The visible light among the light incident on the input optical member 330 may be totally reflected through the display waveguide 350 to be guided to the output optical member 340. The visible light may be output from the output optical member 340 toward the eye 301 of the user.

The wearable electronic device 300 may reflect or transmit the infrared light output from the display 320 through the half mirror. In an embodiment, the wearable electronic device 300 may output the reflected infrared light 303 that is reflected by the half mirror (not shown) directly toward the eye 301 of the user, or may output the reflected infrared light 303 passing through the display waveguide 350 toward the eye 301 of the user. In an embodiment, the wearable electronic device 300 may output the transmitted infrared light 305 passing through the half mirror toward the real object. A reflectivity and a transmittance of the half mirror may be adjusted. For example, the half mirror may have a reflectivity of 30% (e.g., reflection toward eyes of a user) and a transmittance of 70% (e.g., output toward a real object) with respect to infrared light. However, the reflectivity and the transmittance are merely examples and may be adjusted in various ratios.

In an embodiment, the wearable electronic device 300 may output the reflected infrared light 303 toward eyes of the user through the half mirror and the infrared pixels included in the display 320. The reflected infrared light 303 may be reflected from the eye 301 of the user, and the eye tracking sensor 315 may detect the reflected light. The display 320 including the infrared pixels, and the half mirror included in the display waveguide 350 may be used instead of a separate infrared light source for detecting a real object. Since the separate infrared light source is not used, the wearable electronic device 300 may be lightened and power consumption may be reduced. In addition, the display 320 including the infrared pixels may function as an auxiliary light source to increase an image quality of a stereo camera (e.g., the first recognition camera 265a and the second recognition camera 265b of FIG. 2) in a low-illuminance environment and increase an accuracy of depth information.

Alternatively, the wearable electronic device 300 may output infrared light through the display 320 and detect light reflected from the real object through a stereo camera (e.g., the first recognition camera 265a and the second recognition camera 265b of FIG. 2). The wearable electronic device 300 may estimate a distance to the real object based on a detection result. For example, the wearable electronic device 300 may measure a depth value or use a time of flight (ToF) scheme to estimate the distance to the real object.

The wearable electronic device 300 (e.g., the wearable electronic device 200 of FIG. 2) may provide AR to a user. The wearable electronic device 300 may provide an image representing the real world through the transparent waveguide 360, while transferring a virtual object image output from the display 320 toward eyes of the user through the waveguide 350.

The wearable electronic device 300 may include, but is not limited to, for example, a head-mounted display (HMD), a face-mounted display (FMD), or a smart glass or a headset that provides extended reality such as AR, VR, or mixed reality.

According to an embodiment, the wearable electronic device 300 may output infrared light using the display 320 including the infrared pixels. The wearable electronic device 300 may track a gaze of a user, using the infrared light output from the display 320. In addition, the wearable electronic device 300 may estimate a distance to a real object, using the infrared light output from the display 320.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to one embodiment of the disclosure, the electronic device is not limited to those described above.

It should be appreciated that various example embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st," "2nd," or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to one embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method according to various example embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

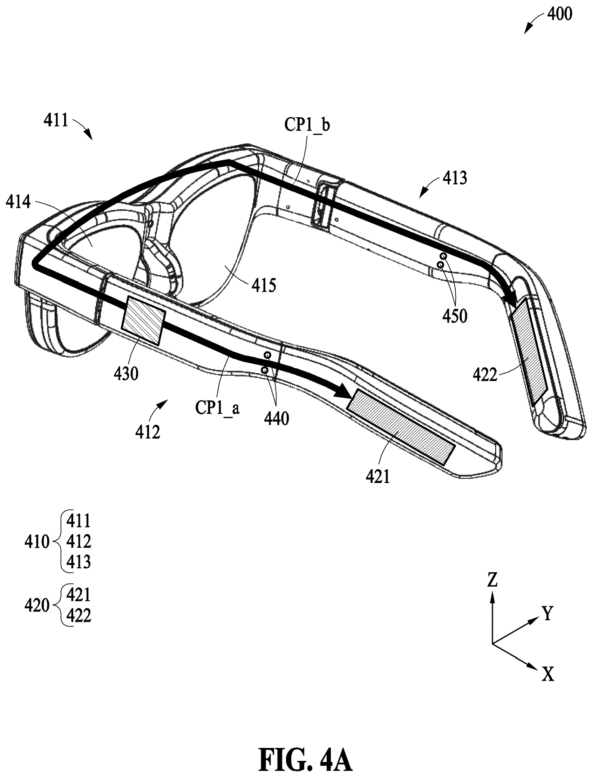

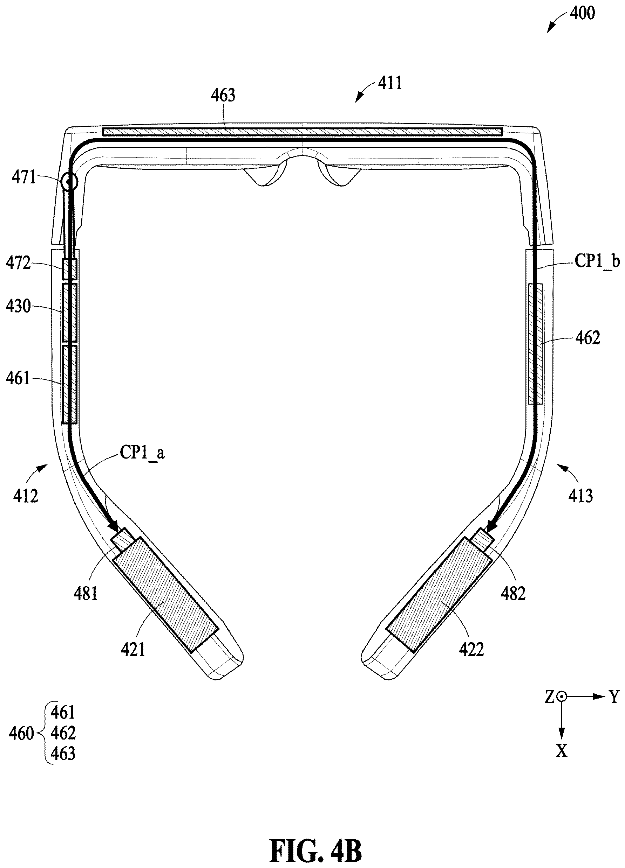

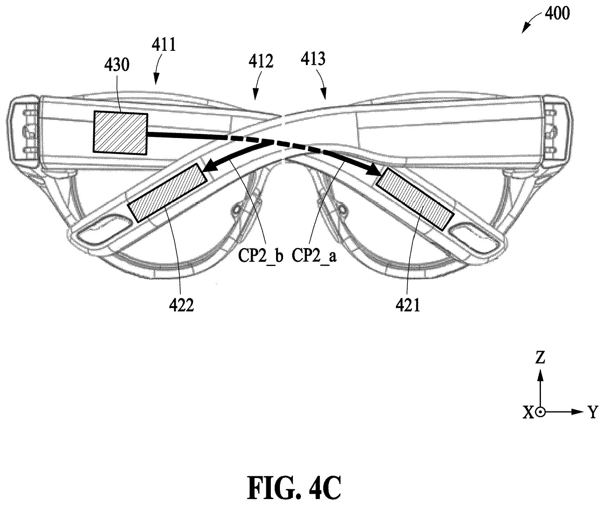

FIG. 4A is a schematic perspective view of a charging path of a wearable electronic device in an unfolded state according to an embodiment. FIG. 4B is a plan view of an internal configuration of the wearable electronic device in an unfolded state according to an embodiment. FIG. 4C is a schematic rear view of a charging path of the wearable electronic device in a folded state according to an embodiment.

Referring to FIGS. 4A to 4C, a wearable electronic device 400 (e.g., the wearable electronic device 200 of FIG. 2) according to an embodiment may be worn on the body (e.g., the head) of a user. For example, the wearable electronic device 400 may substantially include a shape of glasses.

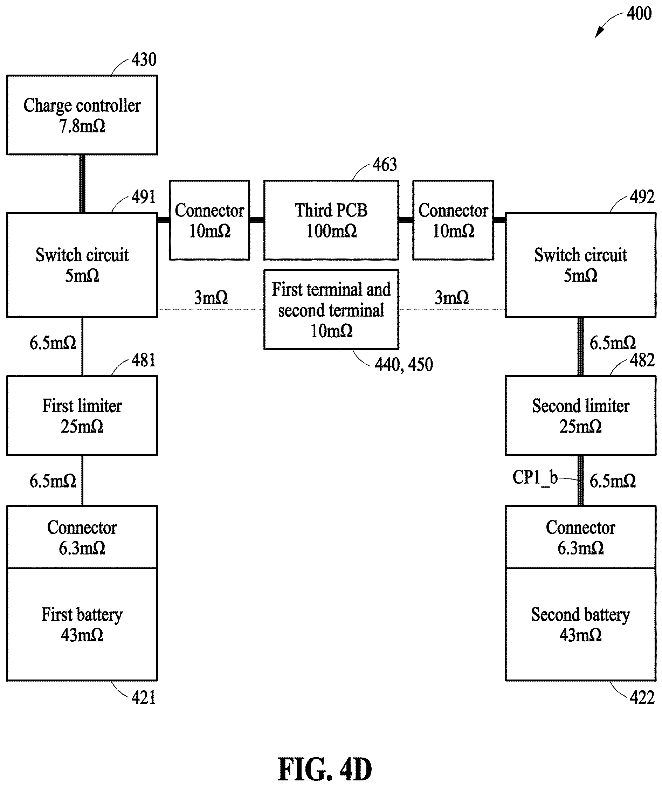

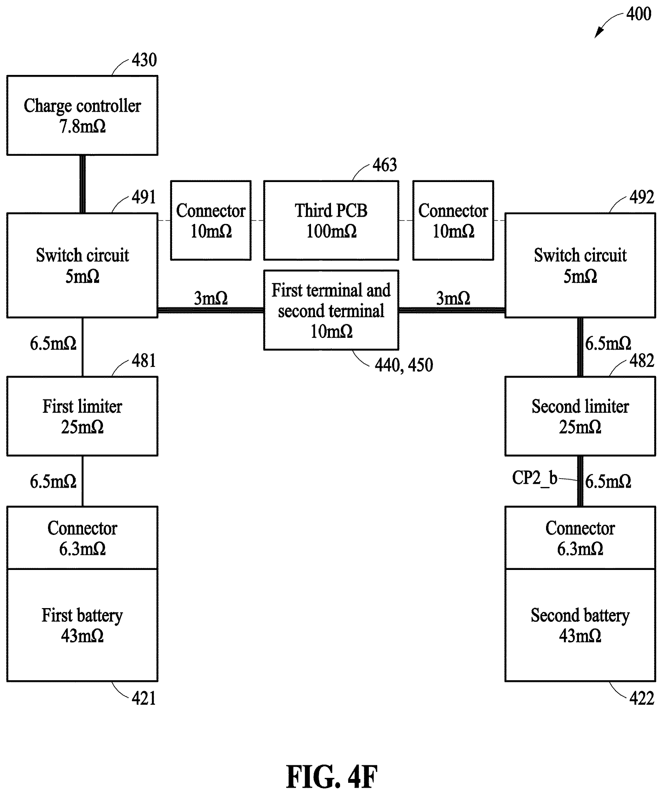

In an embodiment, the wearable electronic device 400 may include a housing 410, lenses 414 and 415, a battery 420, a PCB 460, a charge controller 430, a first terminal 440, a second terminal 450, and a switch circuit (e.g., switch circuits 491 and 492 of FIGS. 4D and 4F).

In an embodiment, the housing 410 may form an exterior of the wearable electronic device 400. The housing 410 may provide a space in which various components of the wearable electronic device 400 are disposed. For example, the housing 410 may include a front 411, a first temple 412 (e.g., the temple 271a of FIG. 2), and a second temple 413 (e.g., the temple 271b of FIG. 2).

In an embodiment, the front 411 may form an exterior of a front surface (e.g., a surface in the -x direction) of the wearable electronic device 400. At least one lens 414 or 415 (e.g., the first transparent member 225a and/or the second transparent member 225b of FIG. 2) may be connected to the front 411. For example, the front 411 may include a pair of rims (e.g., the rims 272a and 272b of FIG. 2) in which a pair of lenses 414 and 415 is arranged and a bridge (e.g., the bridge 273) connecting the pair of rims 272a and 272b. However, this is only an example, and the number of lenses 414 and 415 is not limited thereto. For example, the wearable electronic device 400 may comprise a single lens. For example, the pair of lenses 414 and 415 may be integrally formed. Various components may be disposed inside and/or outside the front 411. For example, a third PCB 463 may be disposed inside the front 411. Meanwhile, the shape of the front 411 illustrated in the drawings is an example and the shape of the front 411 is not limited thereto.

In an embodiment, the first temple 412 and the second temple 413 may form a leg part of the wearable electronic device 400. The first temple 412 and the second temple 413 may be rotatably connected to both sides (e.g., sides in -y and +y directions) of the front 411, respectively. That is, the first temple 412 may be rotatably connected to a first side of the front 411 (e.g. the side in the -y direction) and the second temple 413 may be rotatably connected to a second side of the front 411 (e.g. the side in the +y direction). Various components may be disposed inside and/or outside the first temple 412 and/or the second temple 413. Meanwhile, the shape of the first temple 412 and/or the second temple 413 illustrated in the drawings is an example and the shape of the first temple 412 and/or the second temple 413 is not limited thereto.

In an embodiment, the battery 420 (e.g., the battery 189 of FIG. 1 and/or the battery 260 of FIG. 2) may supply power to components of the wearable electronic device 400. The battery 420 may be charged by an external power source. The battery 420 may be provided inside the housing 410. At least one battery 420 may be provided. For example, the battery 420 may include a first battery 421 and a second battery 422. The first battery 421 may be in the first temple 412. For example, the first battery 421 may be on or near the rear end (e.g., an end in the +x direction, or the direction opposite to the direction of the front surface, when the wearable electronic device 400 is in the unfolded state) of the first temple 412. The second battery 422 may be in the second temple 413. For example, the second battery 422 may be on the rear end (e.g., an end in the +x direction, or the direction opposite to the direction of the front surface, when the wearable electronic device 400 is in the unfolded state) of the second temple 413.

In an embodiment, the PCB 460 may be in the housing 410. Various components may be disposed on the PCB 460. At least one PCB 460 may be provided. For example, the PCB 460 may include a first PCB 461, a second PCB 462, and a third PCB 463. The first PCB 461 may be in the first temple 412. For example, the first PCB 461 may substantially function as a main PCB. The second PCB 462 may be in the second temple 413. For example, the second PCB 462 may substantially function as a sub PCB. The third PCB 463 may be in the front 411. The first PCB 461, the second PCB 462, and/or the third PCB 463 may be electrically connected to each other. At least a portion of the first PCB 461, the second PCB 462, and/or the third PCB 463 may be flexible. However, this is an example and the location, function, and/or shape of the first PCB 461, the second PCB 462, and/or the third PCB 463 are not limited thereto.

In an embodiment, the charge controller 430 may control charging of the battery 420. For example, the charge controller 430 may be a PMIC. For example, the charge controller 430 may be on the first temple 412. For example, the charge controller 430 may be on the first PCB 461. However, this is an example, and the position of the charge controller 430 is not limited thereto. The charge controller 430 may monitor capacity information of the battery 420. The charge controller 430 may control a charging path for charging the battery 420. A detailed description of the charging path is provided below.

In an embodiment, a power supply port 471 may be formed in the housing 410. An external power source may be connected to the power supply port 471. That is, the power supply port (471) may be configured to be connect to (i.e. is connectable to) an external power source. For example, the power supply port 471 may be formed in the front 411. However, this is an example, and the position of the power supply port 471 is not limited thereto. For example, the power supply port 471 may be formed in the first temple 412 and/or the second temple 413. The power supply port 471 may be electrically connected to the charge controller 430. An overvoltage protector 472 may be in an electrical path between the power supply port 471 and the charge controller 430. The overvoltage protector 472 may prevent the battery 420 from being overcharged.

In an embodiment, a limiter 481, or 482 may be in an electrical path between the charge controller 430 and the battery 420. For example, a first limiter 481 may be in an electrical path between the charge controller 430 and the first battery 421. For example, the first limiter 481 may be adjacent to the first battery 421. For example, a second limiter 482 may be in an electrical path between the charge controller 430 and the second battery 422. For example, the second limiter 482 may be adjacent to the second battery 422. The limiter 481, or 482 may control a current flowing into the battery 420. For example, the limiter 481, or 482 may control a charging or discharging current to be within an allowable current of the battery 420.

In an embodiment, the first terminal 440 may be in any one of the front 411, the first temple 412, and the second temple 413. The second terminal 450 may be in another one of the front 411, the first temple 412, and the second temple 413. The first terminal 440 and the second terminal 450 may electrically contact each other when the first temple 412 and the second temple 413 are folded relative to the front 411. That is, the first terminal 440 and second terminal 450 may be positioned and configured to make contact when the wearable electronic device 400 is in the folded state, such that an electrical connection is formed. For example, the first terminal 440 and/or the second terminal 450 may include a pogo pin. For example, as shown in FIG. 4A, the first terminal 440 may be formed on the outer surface (e.g., a surface in the -y direction when the wearable electronic device 400 is in the unfolded state as shown in FIG. 4A and FIG. 4B) of the first temple 412. For example, the first terminal 440 may be substantially formed near the center of the outer surface (e.g., the surface in the -y direction when the wearable electronic device 400 is in the unfolded state as shown in FIG. 4A and FIG. 4B) of the first temple 412. The second terminal 450 may be formed on the inner surface (e.g., a surface in the -y direction when the wearable electronic device 400 is in the unfolded state as shown in FIG. 4A and FIG. 4B) of the second temple 413. For example, the second terminal 450 may be substantially formed near the center of the inner surface (e.g., the surface in the -y direction when the wearable electronic device 400 is in the unfolded state as shown in FIG. 4A and FIG. 4B) of the second temple 413. According to the structure described above, when the first temple 412 and the second temple 413 are folded relative to the front 411 (e.g., see FIG. 4C), the first terminal 440 and the second terminal 450 may electrically contact each other (i.e. make contact such that an electrical connection is formed). However, this is an example, and the position of the first terminal 440 and/or the second terminal 450 is not limited thereto as long as the first terminal 440 and/or the second terminal 450 are within a range in which the first terminal 440 and the second terminal 450 are able to electrically contact each other when the first temple 412 and the second temple 413 are folded relative to the front 411.

Hereinafter, with reference to FIGS. 4A and 4B, when the wearable electronic device 400 is in an unfolded state, a first charging path CP1_a or CP1_b in which the charge controller 430 charges the battery 420 is described. The unfolded state of the wearable electronic device 400 may denote an unfolded state of the first temple 412 and/or the second temple 413 relative to the front 411. For example, in the unfolded state, the first temple 412 and/or the second temple 413 may be oriented in a direction which is not parallel to the front surface of the wearable electronic device 400. For example, the unfolded state may be defined as any folding angle or state of the first temple 412 and second temple 413 in which the first terminal 440 and the second terminal 450 do not make electrical contact.

In an embodiment, when the wearable electronic device 400 is in the unfolded state and an external power source is connected to the wearable electronic device 400, a current may be supplied from the external power source to the charge controller 430. In this state, the charge controller 430 may charge the battery 420 along the first charging path CP1_a or CP1_b. The first charging path CP1_a for charging the first battery 421 in the unfolded state may be a path connected to the first battery 421 from the charge controller 430 through the first temple 412. The first charging path CP1_b for charging the second battery 422 in the unfolded state may be a path connected to the second battery 422 from the charge controller 430 through the first temple 412, the front 411, and the second temple 413. For example, the first charging path CP1_b for charging the second battery 422 in the unfolded state may include the third PCB (e.g., the third PCB 463 of FIG. 4B) positioned inside the front 411. However, these are examples, and the first charging path CP1_a or CP1_b is not limited thereto. Depending on the position of the charge controller 430, a portion of the first charging path CP1_a or CP1_b may change.

Hereinafter, with reference to FIG. 4C, when the wearable electronic device 400 is in a folded state, a second charging path CP2_a or CP2_b in which the charge controller 430 charges the battery 420 is described. The folded state of the wearable electronic device 400 may denote a folded state of the first temple 412 and/or the second temple 413 relative to the front 411. For example, in the folded state, the first temple 412 and/or the second temple 413 may be substantially parallel to the front surface of the wearable electronic device 400. For example, the folded state may be defined as any folding angle or state of the first temple 412 and second temple 413 in which the first terminal 440 and the second terminal 450 make electrical contact.

In an embodiment, when the wearable electronic device 400 is in the folded state and an external power source is connected to the wearable electronic device 400, a current may be supplied from the external power source to the charge controller 430. In this state, the charge controller 430 may charge the battery 420 along the second charging path CP2_a or CP2_b. When the wearable electronic device 400 is in the folded state, the second charging path CP2_a for charging the first battery 421 may be a path connected to the first battery 421 from the charge controller 430 through the first temple 412. When the wearable electronic device 400 is in the folded state, the second charging path CP2_a for charging the first battery 421 may be substantially the same as the first charging path (e.g., the first charging path CP1_a of FIG. 4A) for charging the first battery 421 when the wearable electronic device 400 is in the unfolded state. Meanwhile, when the wearable electronic device 400 is in the folded state, the second charging path CP2_b for charging the second battery 422 may be different from the first charging path (e.g., the first charging path CP1_b of FIG. 4A) for charging the second battery 422 when the wearable electronic device 400 is in the unfolded state. The total resistance of the second charging path CP2_b for charging the second battery 422 when the wearable electronic device 400 is in the folded state may be less than that of the first charging path CP1_b for charging the second battery 422 when the wearable electronic device 400 is in the unfolded state. Accordingly, at least when the wearable electronic device 400 is in the folded state, the charging time may decrease and heat generated during charging may decrease. For example, the second charging path CP2_b for charging the second battery 422 when the wearable electronic device 400 is in the folded state may be shorter than the first charging path CP1_b for charging the second battery 422 when the wearable electronic device 400 is in the unfolded state, the second charging path CP2_b for charging the second battery 422 when the wearable electronic device 400 is in the folded state may bypass one or more components included in the first charging path CP1_b for charging the second battery 422 when the wearable electronic device 400 is in the unfolded state, and/or the second charging path CP2_b for charging the second battery 422 when the wearable electronic device 400 is in the folded state may include a different set of components with a lower total resistance than the components in the first charging path CP1_b for charging the second battery 422 when the wearable electronic device 400 is in the unfolded state. For example, the second charging path CP2_b for charging the second battery 422 in the folded state may be configured to pass through a first terminal (e.g., the first terminal 440 of FIG. 4A) and a second terminal (e.g., the second terminal 450 of FIG. 4A). For example, the second charging path CP2_b for charging the second battery 422 in the folded state may be configured to bypass a third PCB (e.g., the third PCB 463 of FIG. 4B) that is positioned inside the front 411. The second charging path CP2_b for charging the second battery 422 in the folded state may be a path connected to the second battery 422 from the charge controller 430 through the first temple 412, the first terminal 440, the second terminal 450, and the second temple 413. In the same manner, when the wearable electronic device 400 is in the folded state, the second battery 422 may be charged through a shortcut passing through the first terminal 440 and the second terminal 450. According to the path formation described above, since the second charging path CP2_b for charging the second battery 422 in the folded state may bypass the third PCB (e.g., the third PCB 463 of FIG. 4B) positioned inside the front 411, the total resistance of the second charging path CP2_b for charging the second battery 422 in the folded state may be less than that of the first charging path CP1_b for charging the second battery 422 in the unfolded state. Accordingly, at least when the wearable electronic device 400 is in the folded state, the charging time may decrease and heat generated during charging may decrease. However, this is an example, and the second charging path CP2_a or CP2_b is not limited thereto. Depending on the position of the charge controller 430, a portion of the second charging path CP2_a or CP2_b may change.

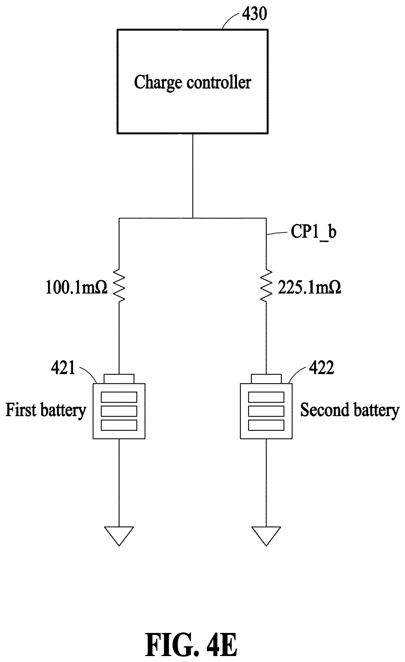

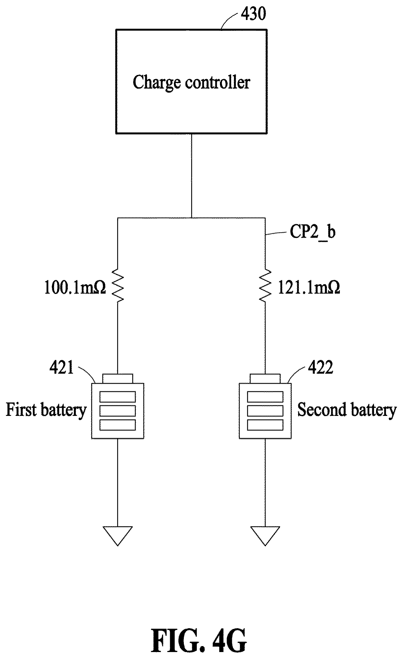

FIG. 4D is a block diagram of a first charging path for charging a battery when the wearable electronic device is in an unfolded state. FIG. 4E is a schematic view of total resistance of the first charging path for charging a battery when the wearable electronic device is in an unfolded state. FIG. 4F is a block diagram of a second charging path for charging a battery when the wearable electronic device is in a folded state. FIG. 4G is a schematic view of total resistance of the second charging path for charging a battery when the wearable electronic device is in a folded state. Hereinafter, based on the second battery 422, charging paths CP1_b and CP2_b in each state are described.

In an embodiment, referring to FIGS. 4D to 4G, a switch circuit 491 or 492 may be configured to selectively connect to the first charging path CP1_b for charging the second battery 422 in the unfolded state and/or the second charging path CP2_b for charging the second battery 422 in the folded state. For example, when the wearable electronic device 400 is connected to an external power source and the wearable electronic device 400 is unfolded, the charge controller 430 may control the switch circuit 491 or 492 to connect to the first charging path CP1_b for charging the second battery 422 in the unfolded state. For example, when the wearable electronic device 400 is connected to an external power source and the wearable electronic device 400 is folded, the charge controller 430 may control the switch circuit 491 or 492 to connect to the second charging path CP2_b for charging the second battery 422 in the folded state. The charge controller 430 may be able to control the switch circuit 491 or 492 to connect to the second charging path CP2_b for charging the second battery 422 in the folded state only when the wearable electronic device 400 is connected to the external power source and a first temple (e.g., the first temple 412 of FIG. 4A) and a second temple (e.g., the second temple 413 of FIG. 4A) are folded relative to a front (e.g., the front 411 of FIG. 4A). If the first temple 412 or the second temple 413 is unfolded relative to the front 411 while the second battery 422 is charged through the second charging path CP2_b for charging the second battery 422 in the folded state, the charge controller 430 may control the switch circuit 491 or 492 to connect to the first charging path CP1_b for charging the second battery 422 in the unfolded state. In the same manner, safety of a user using the wearable electronic device 400 may be protected by configuring the second charging path CP2_b for charging the second battery 422 in the folded state passing through the first terminal 440 and the second terminal 450 to be connected only when the wearable electronic device 400 is folded. Meanwhile, in an embodiment, when the wearable electronic device 400 is connected to the external power source and the wearable electronic device 400 is in the folded state, the charge controller 430 may control the switch circuit 491 or 492 to connect to both the first charging path CP1_b for charging the second battery 422 in the unfolded state and the second charging path CP2_b for charging the second battery 422 in the folded state.

In an embodiment, referring to FIGS. 4D to 4G, the total resistance of the second charging path CP2_b for charging the second battery 422 in the folded state may be less than the total resistance of the first charging path CP1_b for charging the second battery 422 in the unfolded state. For example, since the second charging path CP2_b for charging the second battery 422 in the folded state may bypass a third PCB (e.g., the third PCB 463 of FIG. 4B) in a front (e.g., the front 411 of FIG. 4A), the total resistance of the second charging path CP2_b for charging the second battery 422 in the folded state may be less than the total resistance of the first charging path CP1_b for charging the second battery 422 in the unfolded state. For example, the total resistance of the first charging path CP1_b for charging the second battery 422 in the unfolded state may be 225.1 mΩ and the total resistance of the second charging path CP2_b for charging the second battery 422 in the folded state may be 121.1 mΩ. Accordingly, at least when the wearable electronic device 400 is in the folded state, the charging time may decrease and heat generated during charging may decrease. Meanwhile, the resistance values described with reference to FIGS. 4D to 4G are examples and the resistance value of each component is not limited thereto.

To describe the first charging path CP1_a or CP1_b and/or the second charging path CP2_a or CP2_b with reference to FIGS. 4A to 4G, it may be understood that the expression that the first charging path CP1_a or CP1_b and/or the second charging path CP2_a or CP2_b are connected through at least one of the front 411, the first temple 412 and/or the second temple 413 represents that an electrical connection path is formed in the first charging path CP1_a or CP1_b and/or the second charging path CP2_a or CP2_b through an electrical component disposed inside and/or outside at least one of the front 411, the first temple 412, and/or the second temple 413.

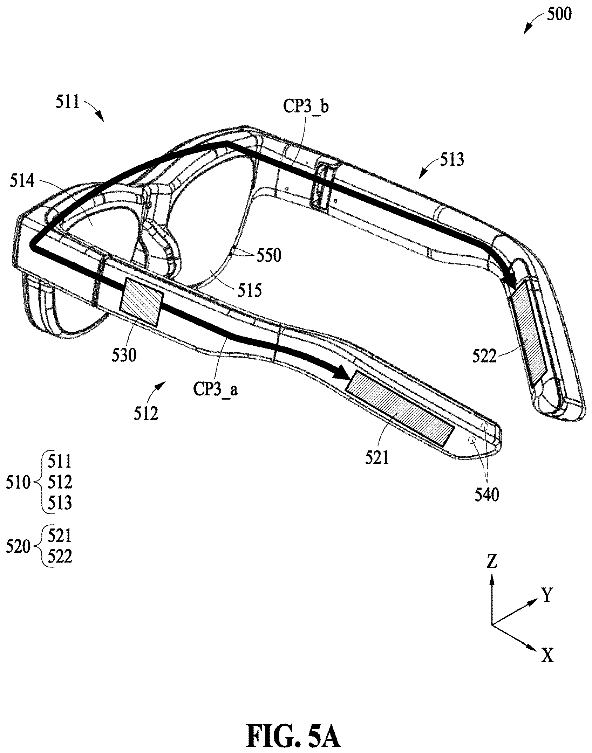

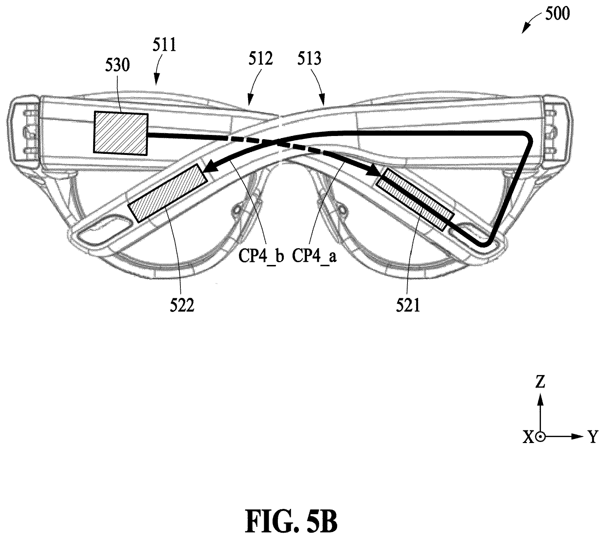

FIG. 5A is a schematic perspective view of a charging path of a wearable electronic device in an unfolded state according to an embodiment. FIG. 5B is a schematic rear view of a charging path of the wearable electronic device in a folded state according to an embodiment.

Referring to FIGS. 5A and 5B, a wearable electronic device 500 (e.g., the wearable electronic device 200 of FIG. 2) according to an embodiment may include a housing 510 (e.g., the housing 410 of FIG. 4A), lenses 514 and 515 (e.g., the lenses 414 and 415 of FIG. 4A), a battery 520 (e.g., the battery 420 of FIG. 4A), a PCB (e.g., the PCB 460 of FIG. 4A), a charge controller 530 (e.g., the charge controller 430 of FIG. 4A), a first terminal 540, a second terminal 550, and a switch circuit (e.g., the switch circuits 491 and 492 of FIGS. 4D and 4F). To describe the wearable electronic device 500 with reference to FIGS. 5A and 5B, a repeated description of the wearable electronic device 400 with reference to FIGS. 4A to 4G is omitted.

In an embodiment, the first terminal 540 and the second terminal 550 may electrically contact each other when a first temple 512 is folded (e.g., see FIG. 5B) relative to a front 511. That is, the first terminal 540 and second terminal 550 may be positioned and configured to make contact when the wearable electronic device 500 is in the folded state, such that an electrical connection is formed. For example, the first terminal 540 and/or the second terminal 550 may include a pogo pin. For example, the first terminal 540 may be formed on the inner surface (e.g., a surface in the +y direction when the wearable electronic device 500 is in the unfolded state as shown in FIG. 5A) of an end (e.g., an end in the +x direction when the wearable electronic device 500 is in the unfolded state as shown in FIG. 5A, or an end in the direction opposite to the direction of the front surface, when the wearable electronic device 500 is in the unfolded state) in a longitudinal direction of the first temple 512. The second terminal 550 may be formed on a lower (e.g., a portion in the -z direction) right (e.g., a side in the +y direction) portion of the front 511. According to the structure described above, at least when the first temple 512 is folded relative to the front 511, the first terminal 540 and the second terminal 550 may electrically contact each other. However, this is an example, and the position of the first terminal 540 and/or the second terminal 550 is not limited thereto as long as the first terminal 540 and the second terminal 550 are within a range in which the first terminal 540 and the second terminal 550 are able to electrically contact each other when the first temple 512 is folded relative to the front 511. According to the structure described above, since it is only necessary to fold the first temple 512 relative to the front 511 in order for the first terminal 540 and the second terminal 550 to make contact, the folded state may be defined as a state in which the first temple 512 is folded relative to the front 511 (e.g. is substantially parallel to the front surface), regardless of the angle of the second temple 513, or may be defined as any folding angle or state of the first temple 512 in which the first terminal 540 and the second terminal 550 make electrical contact, regardless of the angle of the second temple 513. Accordingly, the unfolded state may be defined as any folding angle or state of the first temple 512 in which the first terminal 540 and the second terminal 550 do not make electrical contact, regardless of the angle of the second temple 513.

In an embodiment, because first charging paths CP3_a and CP3_b in which the charge controller 530 charges a first battery 521 and a second battery 522 when the wearable electronic device 500 is unfolded are substantially the same as the first charging paths CP1_a and CP1_b of the wearable electronic device 400 described with reference to FIGS. 4A to 4G, a detailed description thereof is omitted. For example, the first charging path CP3_b in which the charge controller 530 charges the second battery 522 when the wearable electronic device 500 is in the unfolded state may be a path connected to the second battery 522 through the first temple 512, the front 511, and the second temple 513. For example, the first charging path CP3_b for charging the second battery 522 in the unfolded state may include the third PCB (e.g., the third PCB 463 of FIG. 4B) positioned inside the front 511.

Hereinafter, with reference to FIG. 5B, when the wearable electronic device 500 is in a folded state, a second charging path CP4_a or CP4_b in which the charge controller 530 charges the battery 520 is described.

In an embodiment, when the wearable electronic device 500 is in the folded state and an external power source is connected to the wearable electronic device 500, a current may be supplied from the external power source to the charge controller 530. In this state, the charge controller 530 may charge the battery 520 along the second charging path CP4_a or CP4_b. When the wearable electronic device 500 is in the folded state (including when the second temple 513 is folded relative to the front 511), the second charging path CP4_a for charging the first battery 521 may be a path connected to the first battery 521 from the charge controller 530 through the first temple 512. When the wearable electronic device 500 is in the folded state, the second charging path CP4_a for charging the first battery 521 may be substantially the same as the first charging path (e.g., the first charging path CP3_a of FIG. 5A) for charging the first battery 521 when the wearable electronic device 500 is in the unfolded state. Meanwhile, when the wearable electronic device 500 is in the folded state, the second charging path CP4_b for charging the second battery 522 may be different from the first charging path (e.g., the first charging path CP3_b of FIG. 5A) for charging the second battery 522 when the wearable electronic device 500 is in the unfolded state. The total resistance of the second charging path CP4_b for charging the second battery 522 when the wearable electronic device 500 is in the folded state may be less than that of the first charging path CP3_b for charging the second battery 522 when the wearable electronic device 500 is in the unfolded state. Accordingly, at least when the wearable electronic device 500 is in the folded state, the charging time may decrease and heat generated during charging may decrease. For example, the second charging path CP4_b for charging the second battery 522 when the wearable electronic device 500 is in the folded state may be shorter than the first charging path CP3_b for charging the second battery 522 when the wearable electronic device 400 is in the unfolded state, the second charging path CP4_b for charging the second battery 522 when the wearable electronic device 500 is in the folded state may bypass one or more components included in the first charging path CP3_b for charging the second battery 522 when the wearable electronic device 500 is in the unfolded state, and/or the second charging path CP4_b for charging the second battery 522 when the wearable electronic device 500 is in the folded state may include a different set of components with a lower total resistance than the components in the first charging path CP3_b for charging the second battery 522 when the wearable electronic device 500 is in the unfolded state. For example, the second charging path CP4_b for charging the second battery 522 in the folded state may be configured to pass through a first terminal (e.g., the first terminal 540 of FIG. 5A) and a second terminal (e.g., the second terminal 550 of FIG. 5A). For example, the second charging path CP4_b for charging the second battery 522 in the folded state may be configured to bypass a third PCB (e.g., the third PCB 463 of FIG. 4B) that is positioned inside the front 511. The second charging path CP4_b for charging the second battery 522 in the folded state may be a path connected to the second battery 522 from the charge controller 530 through the first temple 512, the first terminal 540, the second terminal 550, the front 511, and the second temple 513. In the same manner, when the wearable electronic device 500 is in the folded state, the second battery 522 may be charged through a shortcut passing through the first terminal 540 and the second terminal 550. According to the path formation described above, since the second charging path CP4_b for charging the second battery 522 in the folded state may bypass the third PCB (e.g., the third PCB 463 of FIG. 4B) positioned inside the front 511, the total resistance of the second charging path CP4_b for charging the second battery 522 in the folded state may be less than that of the first charging path CP3_b for charging the second battery 522 in the unfolded state. Accordingly, at least when the wearable electronic device 500 is in the folded state, the charging time may decrease and heat generated during charging may decrease However, this is an example, and the second charging path CP4_a or CP4_b is not limited thereto. Depending on the position of the charge controller 530, a portion of the second charging path CP4_a or CP4_b may change.

In an embodiment, similar to the embodiment illustrated in FIGS. 4D to 4G, a switch circuit may be configured to selectively connect to the first charging path CP3_b for charging the second battery 522 in the unfolded state and/or the second charging path CP4_b for charging the second battery 522 in the folded state. For example, when the wearable electronic device 500 is connected to an external power source and the wearable electronic device 500 is unfolded (e.g. when the first temple 512 is unfolded), the charge controller 530 may control the switch circuit to connect to the first charging path CP3_b for charging the second battery 522 in the unfolded state. For example, when the wearable electronic device 500 is connected to an external power source and the wearable electronic device 500 is folded (e.g. when the first temple 512 is folded), the charge controller 530 may control the switch circuit to connect to the second charging path CP4_b for charging the second battery 522 in the folded state. The charge controller 530 may be able to control the switch circuit to connect to the second charging path CP4_b for charging the second battery 522 in the folded state only when the wearable electronic device 500 is connected to the external power source and a first temple (e.g., the first temple 512 of FIG. 5A) is folded relative to a front (e.g., the front 511 of FIG. 5A). If the first temple 512 is unfolded relative to the front 511 while the second battery 522 is charged through the second charging path CP4_b for charging the second battery 522 in the folded state, the charge controller 530 may control the switch circuit to connect to the first charging path CP3_b for charging the second battery 522 in the folded state. In the same manner, safety of a user using the wearable electronic device 500 may be protected by configuring the second charging path CP4_b for charging the second battery 522 in the folded state passing through the first terminal 540 and the second terminal 550 to be connected only when the wearable electronic device 500 is folded. Meanwhile, in an embodiment, when the wearable electronic device 500 is connected to the external power source and the wearable electronic device 500 is in the folded state, the charge controller 530 may control the switch circuit to connect to both the first charging path CP3_b for charging the second battery 522 in the unfolded state and the second charging path CP4_b for charging the second battery 522 in the folded state.

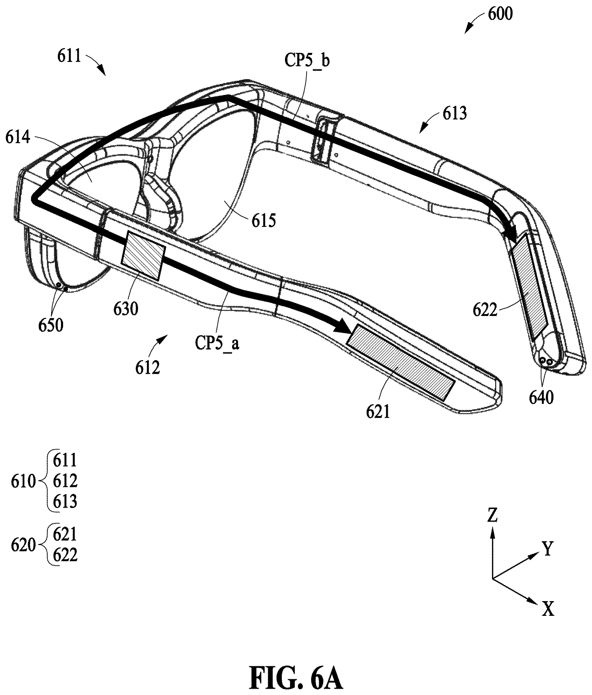

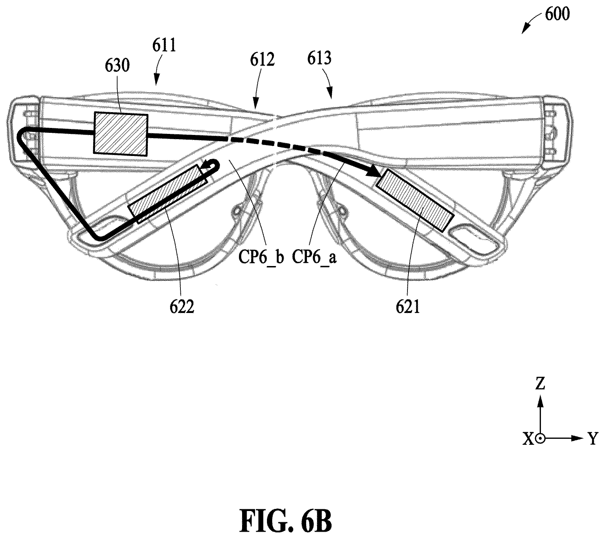

FIG. 6A is a schematic perspective view of a charging path of a wearable electronic device in an unfolded state according to an embodiment. FIG. 6B is a schematic rear view of a charging path of the wearable electronic device in a folded state according to an embodiment.

Referring to FIGS. 6A and 6B, a wearable electronic device 600 (e.g., the wearable electronic device 200 of FIG. 2) according to an embodiment may include a housing 610 (e.g., the housing 410 of FIG. 4A), lenses 614 and 615 (e.g., the lenses 414 and 415 of FIG. 4A), a battery 620 (e.g., the battery 420 of FIG. 4A), a PCB (e.g., the PCB 460 of FIG. 4A), a charge controller 630 (e.g., the charge controller 430 of FIG. 4A), a first terminal 640, a second terminal 650, and a switch circuit (e.g., the switch circuits 491 and 492 of FIGS. 4D and 4F). To describe the wearable electronic device 600 with reference to FIGS. 6A and 6B, a repeated description of the wearable electronic device 400 with reference to FIGS. 4A to 4G is omitted.

In an embodiment, the first terminal 640 and the second terminal 650 may electrically contact each other when a second temple 613 is folded relative to a front 611. That is, the first terminal 640 and second terminal 650 may be positioned and configured to make contact when the electronic device 600 is in the folded state, such that an electrical connection is formed. For example, the first terminal 640 and/or the second terminal 650 may include a pogo pin. For example, the first terminal 640 may be formed on the inner surface (e.g., a surface in the -y direction when the electronic device 600 is in the unfolded state as shown in FIG. 6A) of an end (e.g., an end in the +x direction when the electronic device 600 is in the unfolded state as shown in FIG. 6A, or an end in the direction opposite to the direction of the front surface, when the wearable electronic device 600 is in the unfolded state) in a longitudinal direction of the second temple 613. The second terminal 650 may be formed on the lower (e.g., a portion in the -z direction) left (e.g., a side in the -y direction) portion of the front 611. According to the structure described above, at least when the second temple 613 is folded relative to the front 611, the first terminal 640 and the second terminal 650 may electrically contact each other. However, this is an example, and the position of the first terminal 640 and/or the second terminal 650 is not limited thereto as long as the first terminal 640 and the second terminal 650 are within a range in which the first terminal 640 and the second terminal 650 are able to electrically contact each other when the second temple 613 is folded relative to the front 611.

In an embodiment, because first charging paths CP5_a and CP5_b in which the charge controller 630 charges a first battery 621 and a second battery 622 when the wearable electronic device 600 is unfolded are substantially the same as the first charging paths CP1_a and CP1_b of the wearable electronic device 400 described with reference to FIGS. 4A to 4G, a detailed description thereof is omitted. For example, the first charging path CP5_b in which the charge controller 630 charges the second battery 622 when the wearable electronic device 600 is in the unfolded state may be a path connected to the second battery 622 through the first temple 612, the front 611, and the second temple 613. According to the structure described above, since it is only necessary to fold the second temple 613 relative to the front 611 in order for the first terminal 640 and the second terminal 650 to make contact, the folded state may be defined as a state in which the second temple 613 is folded relative to the front 611 (e.g. is substantially parallel to the front surface), regardless of the angle of the first temple 612, or may be defined as any folding angle or state of the second temple 613 in which the first terminal 640 and the second terminal 650 make electrical contact, regardless of the angle of the first temple 612. Accordingly, the unfolded state may be defined as any folding angle or state of the second temple 613 in which the first terminal 640 and the second terminal 650 do not make electrical contact, regardless of the angle of the first temple 612.

Hereinafter, with reference to FIG. 6B, when the wearable electronic device 600 is in a folded state, a second charging path CP6_a or CP6_b in which the charge controller 630 charges the battery 620 is described.

In an embodiment, when the wearable electronic device 600 is in the folded state and an external power source is connected to the wearable electronic device 600, a current may be supplied from the external power source to the charge controller 630. In this state, the charge controller 630 may charge the battery 620 along the second charging path CP6_a or CP6_b. When the wearable electronic device 600 is in the folded state (including when the first temple 612 is folded relative to the front 611), the second charging path CP6_a for charging the first battery 621 may be a path connected to the first battery 621 from the charge controller 630 through the first temple 612. When the wearable electronic device 600 is in the folded state, the second charging path CP6_a for charging the first battery 621 may be substantially the same as the first charging path (e.g., the first charging path CP5_a of FIG. 6A) for charging the first battery 621 when the wearable electronic device 600 is in the unfolded state. Meanwhile, when the wearable electronic device 600 is in the folded state, the second charging path CP6_b for charging the second battery 622 may be different from the first charging path (e.g., the first charging path CP5_b of FIG. 6A) for charging the second battery 622 when the wearable electronic device 600 is in the unfolded state. The total resistance of the second charging path CP6_b for charging the second battery 622 when the wearable electronic device 600 is in the folded state may be less than that of the first charging path CP5_b for charging the second battery 622 when the wearable electronic device 600 is in the unfolded state. Accordingly, at least when the wearable electronic device 600 is in the folded state, the charging time may decrease and heat generated during charging may decrease. For example, the second charging path CP6_b for charging the second battery 622 when the wearable electronic device 600 is in the folded state may be shorter than the first charging path CP5_b for charging the second battery 622 when the wearable electronic device 600 is in the unfolded state, the second charging path CP6_b for charging the second battery 622 when the wearable electronic device 600 is in the folded state may bypass one or more components included in the first charging path CP5_b for charging the second battery 622 when the wearable electronic device 600 is in the unfolded state, and/or the second charging path CP6_b for charging the second battery 622 when the wearable electronic device 600 is in the folded state may include a different set of components with a lower total resistance than the components in the first charging path CP5_b for charging the second battery 622 when the wearable electronic device 600 is in the unfolded state. For example, the second charging path CP6_b for charging the second battery 622 in the folded state may be configured to pass through a first terminal (e.g., the first terminal 640 of FIG. 6A) and a second terminal (e.g., the second terminal 650 of FIG. 6A). For example, the second charging path CP6_b for charging the second battery 622 in the folded state may be configured to bypass a third PCB (e.g., the third PCB 463 of FIG. 4B) that is positioned inside the front 611. The second charging path CP6_b for charging the second battery 622 in the folded state may be a path connected to the second battery 622 from the charge controller 630 through the first temple 612, the front 611, the second terminal 650, the first terminal 640, and the second temple 613. In the same manner, when the wearable electronic device 600 is in the folded state, the second battery 622 may be charged through a shortcut passing through the first terminal 640 and the second terminal 650. According to the path formation described above, since the second charging path CP6_b for charging the second battery 622 in the folded state may bypass the third PCB (e.g., the third PCB 463 of FIG. 4B) positioned inside the front 611, the total resistance of the second charging path CP6_b for charging the second battery 622 in the folded state may be less than that of the first charging path CP5_b for charging the second battery 622 in the unfolded state. Accordingly, at least when the wearable electronic device 600 is in the folded state, the charging time may decrease and heat generated during charging may decrease. However, this is an example, and the second charging path CP6_a or CP6_b is not limited thereto. Depending on the position of the charge controller 630, a portion of the second charging path CP6_a or CP6_b may change.

In an embodiment, similar to the embodiment illustrated in FIGS. 4D to 4G, a switch circuit may be configured to selectively connect to the first charging path CP5_b for charging the second battery 622 in the unfolded state and/or the second charging path CP6_b for charging the second battery 622 in the folded state. For example, when the wearable electronic device 600 is connected to an external power source and the wearable electronic device 600 is unfolded (e.g. when the second temple 613 is unfolded), the charge controller 630 may control the switch circuit to connect to the first charging path CP5_b for charging the second battery 622 in the unfolded state. For example, when the wearable electronic device 600 is connected to an external power source and the wearable electronic device 600 is folded (e.g. when the second temple 613 is unfolded), the charge controller 630 may control the switch circuit to connect to the second charging path CP6_b for charging the second battery 622 in the folded state. The charge controller 630 may be able to control the switch circuit to connect to the second charging path CP6_b for charging the second battery 622 in the folded state only when the wearable electronic device 600 is connected to the external power source and a second temple (e.g., the second temple 613 of FIG. 6A) is folded relative to a front (e.g., the front 611 of FIG. 6A). If the second temple 613 is unfolded relative to the front 611 while the second battery 622 is charged through the second charging path CP6_b for charging the second battery 622 in the folded state, the charge controller 630 may control the switch circuit to connect to the first charging path CP5_b for charging the second battery 622 in the folded state. In the same manner, safety of a user using the wearable electronic device 600 may be protected by configuring the second charging path CP6_b for charging the second battery 622 in the folded state passing through the first terminal 640 and the second terminal 650 to be connected only when the wearable electronic device 600 is folded. Meanwhile, in an embodiment, when the wearable electronic device 600 is connected to the external power source and the wearable electronic device 600 is in the folded state, the charge controller 630 may control the switch circuit to connect to both the first charging path CP5_b for charging the second battery 622 in the unfolded state and the second charging path CP6_b for charging the second battery 622 in the folded state.

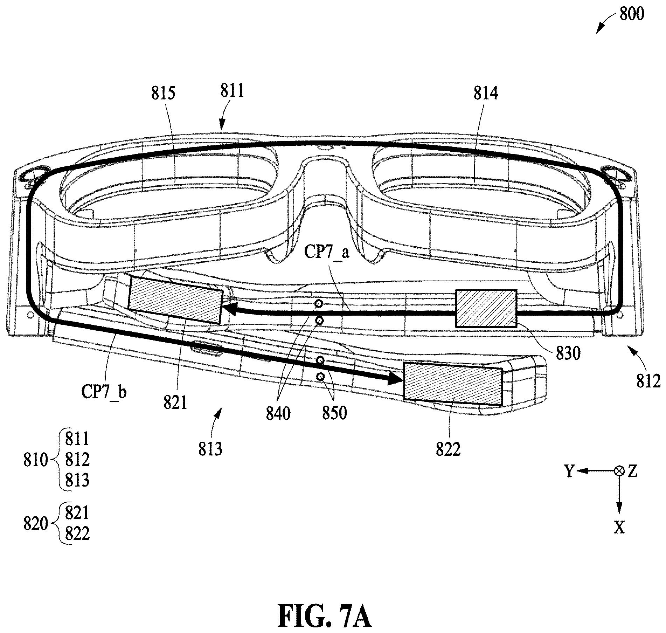

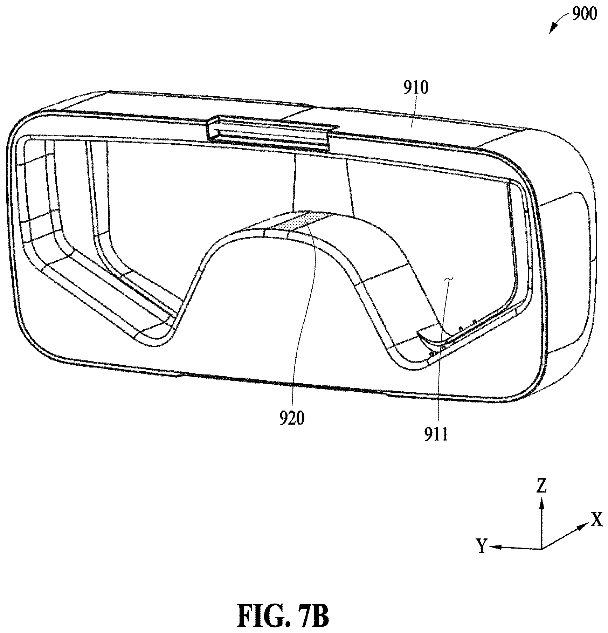

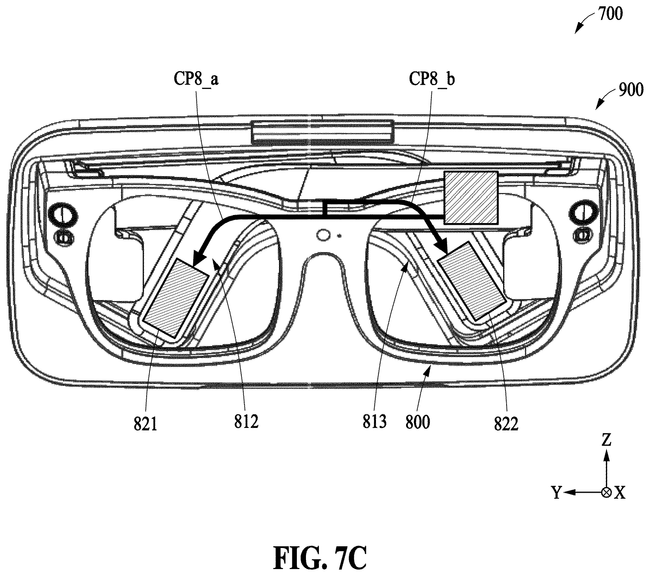

FIG. 7A is a bottom view of a folded state of a wearable electronic device according to an embodiment. FIG. 7B is a front view of a case according to an embodiment. FIG. 7C is a front view of the wearable electronic device accommodated in the case according to an embodiment.

Referring to FIGS. 7A to 7C, a charging system 700 according to an embodiment may include a wearable electronic device 800 and a case 900.

In an embodiment, the wearable electronic device 800 (e.g., the wearable electronic device 200 of FIG. 2) may include a housing 810 (e.g., the housing 410 of FIG. 4A), lenses 814 and 815 (e.g., the lenses 414 and 415 of FIG. 4A), a battery 820 (e.g., the battery 420 of FIG. 4A), a PCB (e.g., the PCB 460 of FIG. 4A), a charge controller 830 (e.g., the charge controller 430 of FIG. 4A), a first terminal 840, a second terminal 850, and a switch circuit (e.g., the switch circuits 491 and 492 of FIGS. 4D and 4F). To describe the wearable electronic device 800 with reference to FIGS. 7A to 7C, a repeated description of the wearable electronic device 400 with reference to FIGS. 4A to 4G is omitted.

In an embodiment, the first terminal 840 may be positioned on the first temple 812. The second terminal 850 may be positioned on the second temple 813. For example, the first terminal 840 and/or the second terminal 850 may include a pogo pin. For example, as illustrated in FIG. 7, the first terminal 840 may be formed on a bottom surface (e.g., a surface in the -z direction) of the first temple 812. For example, the first terminal 840 may be substantially formed near the center of the bottom surface (e.g., the surface in the -z direction) of the first temple 812. The second terminal 850 may be formed on the bottom surface (e.g., the surface in the -z direction) of the second temple 813. For example, the second terminal 850 may be formed near the center of the bottom surface (e.g., the surface in the -z direction) of the second temple 813.

In an embodiment, the wearable electronic device 800 may be configured to be accommodated in the case 900. The case 900 may be configured to accommodate and store the wearable electronic device 800. When the wearable electronic device 800 is accommodated in the case 900, the wearable electronic device 800 may be charged through the case 900. For example, when an external power source is connected to the case 900, the wearable electronic device 800 may receive power from the external power source through electrical contact with the case 900. For example, the case 900 may include a battery (not illustrated) therein and the wearable electronic device 800 may receive power from the battery in the case 900 through electrical contact with the case 900.

In an embodiment, the case 900 may include a case body 910 and a contact pad 920. The case body 910 may form an accommodation space 911 in which the wearable electronic device 800 can be accommodated. For example, the accommodation space 911 may be substantially formed in a shape corresponding to the external shape of the wearable electronic device 800. Meanwhile, the shape of the case body 910 illustrated in FIG. 7B is an example and the accommodation space 911 may be able to be open and closed in the case body 910. For example, the case body 910 may be shaped such that it can be opened to receive or remove the wearable electronic device 800 in the accommodation space 911 and such that it can be closed to store and/or protect the wearable electronic device 800 inside the accommodation space 911.

In an embodiment, the contact pad 920 may be formed in the case body 910. For example, the contact pad 920 may be formed of an electrically conductive material. When the wearable electronic device 800 is accommodated in the case 900, the contact pad 920 may be configured to electrically contact the first terminal 840 and the second terminal 850. That is, the contact pad 920 and the first terminal 840 and second terminal 850 may be positioned and configured to make contact when the electronic device 800 is accommodated in the case 900, such that an electrical connection is formed between the contact pad 920 and the first terminal 840 and the second terminal 850. For example, the contact pad 920 may be formed on a portion to support a nose support of the wearable electronic device 800 in the case body 910. However, this is an example, and the position of the contact pad 920 is not limited thereto as long as the contact pad 920 is positioned within a range in which the contact pad 920 is able to contact the first terminal 840 and the second terminal 850 when the wearable electronic device 800 is accommodated in the case 900.

In an embodiment, when the wearable electronic device 800 is not accommodated in the case 900 and an external power source is connected to the wearable electronic device 800, the charge controller 830 may charge the battery 820 along a first charging path CP7_a or CP7_b. The first charging path CP7_a for charging a first battery 821 may be a path connected to the first battery 821 from the charge controller 830 through the first temple 812. The first charging path CP7_b for charging the second battery 822 may be a path connected to the second battery 822 from the charge controller 830 through the first temple 812, the front 811, and the second temple 813. However, this is an example, and the first charging path CP7_a or CP7_b is not limited thereto. Depending on the position of the charge controller 830, a portion of the first charging path CP7_a or CP7_b may change.

In an embodiment, when the wearable electronic device 800 is accommodated in the case 900 and an external power source (which may include a battery of the case 900) is connected to the wearable electronic device 800, the charge controller 830 may charge the battery 820 along a second charging path CP8_a or CP8_b. When the wearable electronic device 800 is accommodated in the case 900, the second charging path CP8_a for charging the first battery 821 may be a path connected to the first battery 821 from the charge controller 830 through the first temple 812. When the wearable electronic device 800 is accommodated in the case 900, the second charging path CP8_a for charging the first battery 821 may be substantially the same as the first charging path CP7_a for charging the first battery 821 when the wearable electronic device 800 is not accommodated in the case 900. Meanwhile, when the wearable electronic device 800 is accommodated in the case 900, the second charging path CP8_b for charging the second battery 822 may be different from the first charging path CP7_b for charging the second battery 822 when the wearable electronic device 800 is not accommodated in the case 900. The total resistance of the second charging path CP8_b for charging the second battery 822 when the wearable electronic device 800 is accommodated in the case 900 may be less than that of the first charging path CP7_b for charging the second battery 422 when the wearable electronic device 400 is not accommodated in the case 900. Accordingly, at least when the wearable electronic device 800 is accommodated in the case 900, the charging time may decrease and heat generated during charging may decrease. For example, the second charging path CP8_b for charging the second battery 822 when the wearable electronic device 800 is accommodated in the case 900 may be shorter than the first charging path CP7_b for charging the second battery 822 when the wearable electronic device 800 is not accommodated in the case 900, the second charging path CP8_b for charging the second battery 822 when the wearable electronic device 800 is accommodated in the case 900 may bypass one or more components included in the first charging path CP7_b for charging the second battery 822 when the wearable electronic device 800 is not accommodated in the case 900, and/or the second charging path CP8_b for charging the second battery 822 when the wearable electronic device 800 is accommodated in the case 900 may include a different set of components with a lower total resistance than the components in the first charging path CP7_b for charging the second battery 822 when the wearable electronic device 800 is not accommodated in the case 900. For example, the second charging path CP8_b for charging the second battery 822 when the wearable device 800 is accommodated in the case 900 may be configured to pass through the first terminal 840, the second terminal 850, and the contact pad 920. For example, the second charging path CP8_b for charging the second battery 822 when the wearable device 800 is accommodated in the case 900 may be configured to bypass a third PCB (e.g., the third PCB 463 of FIG. 4B) that is inside the front 811. The second charging path CP8_b for charging the second battery 822 when the wearable device 800 is accommodated in the case 900 may be a path connected to the second battery 822 from the charge controller 830 through the first temple 812, the first terminal 840, the contact pad 920, the second terminal 850, and the second temple 813. In the same manner, when the wearable electronic device 800 is accommodated in the case 900, the second battery 822 may be charged through a shortcut passing through the first terminal 840, the second terminal 850, and the contact pad 920. According to the path formation described above, since the second charging path CP8_b for charging the second battery 822 when the wearable device 800 is accommodated in the case 900 may bypass the third PCB (e.g., the third PCB 463 of FIG. 4B) inside the front 811, the total resistance of the second charging path CP8_b when the wearable device 800 is accommodated in the case 900 may be less than that of the first charging path CP7_b when the wearable device 800 is not accommodated in the case 900. Accordingly, at least when the wearable electronic device 800 is accommodated in the case 900, the charging time may decrease and heat generated during charging may decrease. However, this is an example, and the second charging path CP8_a or CP8_b is not limited thereto. Depending on the position of the charge controller 830, a portion of the second charging path CP8_a or CP8_b may change.

In an embodiment, the wearable electronic device 400, 500, or 600 may include the housing 410, 510, or 610 including the front 411, 511, or 611 to which at least one lens is connected, the first temple 412, 512, or 612 rotatably connected to a first side of the front 411, 511, or 611 and the second temple 413, 513, or 613 rotatably connected to a second side of the front 411, 511, or 611, the battery 420, 520, or 620 provided inside the housing 410, 510, or 610, and the charge controller 430, 530, or 630 configured to control charging of the battery 420, 520, or 620. The charge controller 430, 530, or 630 may be configured to, when the first temple 412, 512, or 612 and the second temple 413, 513, or 613 are unfolded relative to the front 411, 511, or 611, charge the battery 420, 520, or 620 through a first charging path CP1_b, CP3 _b, or CP5_b. The charge controller 430, 530, or 630 may be configured to, when at least one of the first temple 412, 512, or 612 and the second temple 413, 513, or 613 are folded relative to the front 411, 511, or 611, charge the battery 420, 520, or 620 through a second charging path CP2_b, CP4_b, or CP6_b that is different from the first charging path CP1_b, CP3_b, or CP5_b.

In an embodiment, a total resistance of the second charging path CP2_b, CP4_b, or CP6_b may be less than a total resistance of the first charging path CP1_b, CP3_b, or CP5_b.

In an embodiment, the wearable electronic device 400, 500, or 600 may further include the first terminal 440, 540, or 640 positioned on any one of the front 411, 511, or 611, the first temple 412, 512, or 612, and the second temple 413, 513, or 613, and the second terminal 450, 550, or 650 positioned on another one of the front 411, 511, or 611, the first temple 412, 512, or 612, and the second temple 413, 513, or 613 and electrically contacting the first terminal 440, 540, and 640 when the first temple 412, 512, or 612 and the second temple 413, 513, or 613 are folded relative to the front 411, 511, or 611.

In an embodiment, the second charging path CP2_b, CP4_b, or CP6_b may be configured to pass the first terminal 440, 540, or 640 and the second terminal 450, 550, or 650.

In an embodiment, the second charging path CP2_b, CP4_b, or CP6_b may be configured to bypass the PCB 463 positioned inside the front 411, 511, or 611.

In an embodiment, the charge controller 430, 530, or 630 may be positioned on the first temple 412, 512, or 612, and the battery 420, 520, or 620 may include the first battery 421, 521, or 621 in the first temple 412, 512, or 612 and the second battery 422, 522, or 622 in the second temple 413, 513, or 613.

In an embodiment, the first terminal 440 may be positioned on the first temple 412, and the second terminal 450 may be positioned on the second temple 413 and when the first temple 412 and the second temple 413 are folded relative to the front 411, the second terminal 450 electrically contacts the first terminal 440.

In an embodiment, the first charging path CP1_b for charging the second battery 422 may be a path connected to the second battery 422 from the charge controller 430 through the first temple 412, the front 411, and the second temple 413. The second charging path CP2_b for charging the second battery 422 may be a path connected to the second battery 422 from the charge controller 430 through the first temple 412, the first terminal 440, the second terminal 450, and the second temple 413.

In an embodiment, the first terminal 540 may be positioned on the first temple 512, the second terminal 550 may be positioned on the front 511 and when the first temple 512 is folded relative to the front 511, the second terminal 550 may electrically contact the first terminal 540.

In an embodiment, the first charging path CP3_b for charging the second battery 522 may be a path connected to the second battery 522 from the charge controller 530 through the first temple 512, the front 511, and the second temple 513. The second charging path CP4_b for charging the second battery 522 may be a path connected to the second battery 522 from the charge controller 530 through the first temple 512, the first terminal 540, the second terminal 550, the front 511, and the second temple 513.

In an embodiment, the first terminal 640 may be positioned on the second temple 613, the second terminal 650 may be positioned on the front 611, and when the second temple 613 is folded relative to the front 611, the second terminal 650 may electrically contact the first terminal 640.

In an embodiment, the first charging path CP5_b for charging the second battery 622 may be a path connected to the second battery 622 from the charge controller 630 through the first temple 612, the front 611, and the second temple 613. The second charging path CP6_b for charging the second battery 622 may be a path connected to the second battery 622 from the charge controller 630 through the first temple 612, the front 611, the second terminal 650, the first terminal 640, and the second temple 613.

In an embodiment, the wearable electronic device 400, 500, or 600 may further include the switch circuit 491 or 492 configured to selectively connect to the first charging path CP1_b, CP3_b, or CP5_b or the second charging path CP2_b, CP4_b, or CP6_b.

In an embodiment, the charge controller 430, 530, or 630 may control the switch circuit 491 or 492 to connect to the second charging path CP2_b, CP4_b, or CP6_b only when an external power source is connected to the wearable electronic device 400, 500, or 600 and the first temple 412, 512, or 612 and the second temple 413, 513, or 613 are folded relative to the front 411, 511, or 611.

In an embodiment, when the first temple 412, 512, or 612 or the second temple 413, 513, or 613 is unfolded relative to the front 411, 511, or 611 while charging the battery 420, 520, or 620 through the second charging path CP2_b, CP4_b, or CP6_b, the charge controller 430, 530, or 630 may control the switch circuit 491 or 492 to connect to the first charging path CP1_b, CP3_b, or CP5_b.

In an embodiment, the charging system 700 may include the wearable electronic device 800, and the case 900 in which the wearable electronic device 800 is accommodated. The wearable electronic device 800 may include the housing 810 including the front 811 to which at least one lens is connected and the first temple 812 and the second temple 813 which are rotatably connected to both sides of the front 811, respectively, the battery 820 provided inside the housing 810, and the charge controller 830 configured to control charging of the battery 820, and the first terminal 840 positioned on the first temple 812 and the second terminal 850 positioned on the second temple 813. The case 900 may include the case body 910 forming the space 911 in which the wearable electronic device 800 is accommodated, and the contact pad 920 formed in the case body 910 and electrically contacting the first terminal 840 and the second terminal 850 when the wearable electronic device 800 is accommodated in the case 900. The charge controller 830 may be configured to, when the wearable electronic device 800 is not accommodated in the case 900, charge the battery 820 through a first charging path CP7_b. The charge controller 830 may be configured to, when the wearable electronic device 800 is accommodated in the case 900, charge the battery 820 through a second charging path CP8_b that is different from the first charging path CP7_b.

In an embodiment, a total resistance of the second charging path CP8_b may be less than a total resistance of the first charging path CP7_b.

In an embodiment, the second charging path CP8_b may be configured to pass the first terminal 840, the second terminal 850, and the contact pad 920.

In an embodiment, the second charging path CP8_b may be configured to bypass a PCB inside the front 811.

In an embodiment, the charge controller 830 may be positioned on the first temple 812, the battery 820 may include a first battery 821 provided in the first temple 812 and a second battery 822 provided in the second temple 813. The first charging path CP7_b for charging the second battery 822 may be a path connected to the second battery 822 from the charge controller 830 through the first temple 812, the front 811, and the second temple 813. The second charging path CP8_b for charging the second battery 822 may be a path connected to the second battery 822 from the charge controller 830 through the first temple 812, the first terminal 840, the contact pad 920, the second terminal 850, and the second temple 813.

In a first example, a wearable electronic device 400, 500, or 600 is provided, comprising: a housing 410, 510, or 610 comprising: a front 411, 511, or 611 to which at least one lens is connected; a first temple 412, 512, or 612 rotatably connected to a first side of the front 411, 511, or 611; and a second temple 413, 513, or 613 rotatably connected to a second side of the front 411, 511, or 611; a battery 420, 520, or 620 provided inside the housing 410, 510, or 610; and a charge controller 430, 530, or 630 configured to control charging of the battery 420, 520, or 620, wherein the charge controller 430, 530, or 630 is configured to, based on a folding state of at least one of the first temple 412, 512, or 612 and the second temple 413, 513, or 613 relative to the front 411, 511, or 611, charge the battery 420, 520, or 620 through a first charging path CP1_b, CP3_b, or CP5_b or charge the battery 420, 520, or 620 through a second charging path CP2_b, CP4_b, or CP6_b that is different from the first charging path CP1_b, CP3_b, or CP5_b.

In a second example, the wearable electronic device 400, 500, or 600 of the first example is provided, wherein a total resistance of the second charging path CP2_b, CP4_b, or CP6_b is less than a total resistance of the first charging path CP1_b, CP3_b, or CP5_b.

In a third example, the wearable electronic device 400, 500, or 600 of the first example or the second example is provided, further comprising: a first terminal 440, 540, or 640 positioned on any one of the front 411, 511, or 611, the first temple 412, 512, or 612, and the second temple 413, 513, or 613; and a second terminal 450, 550, or 650 positioned on another one of the front 411, 511, or 611, the first temple 412, 512, or 612, and the second temple 413, 513, or 613 and, wherein the second terminal 450, 550, or 650 is configured to electrically contact the first terminal 440, 540, or 640 when at least one of the first temple 412, 512, or 612 and the second temple 413, 513, or 613 are folded relative to the front 411, 511, or 611.

In a fourth example, the wearable electronic device 400, 500, or 600 of the third example is provided, wherein the second charging path CP2_b, CP4_b, or CP6_b is configured to pass through the first terminal 440, 540, or 640 and the second terminal 450, 550, or 650.

In a fifth example, the wearable electronic device 400, 500, or 600 of any of the first to fourth examples is provided, wherein the second charging path CP2_b, CP4_b, or CP6_b is configured to bypass a printed circuit board (PCB) 463 positioned inside the front 411, 511, or 611.

In a sixth example, the wearable electronic device 400, 500, or 600 of any of the first to fifth examples is provided, wherein the charge controller 430, 530, or 630 is positioned on the first temple 412, 512, or 612, and the battery 420, 520, or 620 comprises a first battery 421, 521, or 621 in the first temple 412, 512, or 612 and a second battery 422, 522, or 622 in the second temple 413, 513, or 613.

In a seventh example, the wearable electronic device 400 of any of the first to sixth examples is provided, wherein a first terminal 440 is positioned on the first temple 412, wherein a second terminal 450 is positioned on the second temple 413, and wherein when the first temple 412 and the second temple 413 are folded relative to the front 411, the second terminal 450 is configured to electrically contact the first terminal 440.

In an eighth example, the wearable electronic device 400 of the seventh example (when including the features of the sixth example) is provided, wherein the first charging path CP1_b for charging the second battery 422 is a path connected to the second battery 422 from the charge controller 430 through the first temple 412, the front 411, and the second temple 413, and wherein the second charging path CP2_b for charging the second battery 422 is a path connected to the second battery 422 from the charge controller 430 through the first temple 412, the first terminal 440, the second terminal 450, and the second temple 413.

In a ninth example, the wearable electronic device 500 of any of the first to sixth examples is provided, wherein a first terminal 540 is positioned on the first temple 512, wherein a second terminal 550 is positioned on the front 511, and wherein when the first temple 512 is folded relative to the front 511, the second terminal 550 is configured to electrically contact the first terminal 540.

In a tenth example, the wearable electronic device 500 of the ninth example (when including the features of the sixth example) is provided, wherein the first charging path CP3_b for charging the second battery 522 is a path connected to the second battery 522 from the charge controller 530 through the first temple 512, the front 511, and the second temple 513, and wherein the second charging path CP4_b for charging the second battery 522 is a path connected to the second battery 522 from the charge controller 530 through the first temple 512, the first terminal 540, the second terminal 550, the front 511, and the second temple 513.

In an eleventh example, the wearable electronic device 600 of any of the first to sixth examples is provided, wherein the first terminal 640 is positioned on the second temple 613, wherein the second terminal 650 is positioned on the front 611, and wherein when the second temple 613 is folded relative to the front 611, the second terminal 650 is configured to electrically contact the first terminal 640.

In a twelfth example the wearable electronic device 600 of the eleventh example (when including all the features of the sixth example) is provided, wherein the first charging path CP5_b for charging the second battery 622 is a path connected to the second battery 622 from the charge controller 630 through the first temple 612, the front 611, and the second temple 613, and wherein the second charging path CP6_b for charging the second battery 622 is a path connected to the second battery 622 from the charge controller 630 through the first temple 612, the front 611, the second terminal 650, the first terminal 640, and the second temple 613.

In a thirteenth example, the wearable electronic device 400, 500, or 600 of any of the first to twelfth examples is provided, further comprising: a switch circuit 491 or 492 configured to selectively connect to the first charging path CP1_b, CP3_b, or CP5_b or the second charging path CP2_b, CP4_b, or CP6_b.

In a fourteenth example, the wearable electronic device 400, 500, or 600 of the thirteenth example is provided, wherein the charge controller 430, 530, or 630 is configured to control the switch circuit 491 or 492 to connect to the second charging path CP2_b, CP4_b, or CP6_b only when an external power source is connected to the wearable electronic device 400, 500, or 600 and the first temple 412, 512, or 612 and the second temple 413, 513, or 613 are folded relative to the front 411, 511, or 611.

In a fifteenth example, the wearable electronic device 400, 500, or 600 of the thirteenth or fourteenth examples is provided, wherein, when the first temple 412, 512, or 612 or the second temple 413, 513, or 613 is unfolded relative to the front 411, 511, or 611 while charging the battery 420, 520, or 620 through the second charging path CP2_b, CP4_b, or CP6_b, the charge controller 430, 530, or 630 is configured to control the switch circuit 491 or 492 to connect to the first charging path CP1_b, CP3_b, or CP5_b.

In a sixteenth example, a charging system 700 is provided comprising: a wearable electronic device 800; and a case 900 configured to accommodate the wearable electronic device 800, wherein the wearable electronic device 800 comprises: a housing 810 comprising: a front 811 to which at least one lens is connected; a first temple 812 rotatably connected to a first side of the front 811; and a second temple 813 rotatably connected to a second side of the front 811; a battery 820 provided inside the housing 810; a charge controller 830 configured to control charging of the battery 820; and a first terminal 840 positioned on the first temple 812 and a second terminal 850 positioned on the second temple 813, wherein the case 900 comprises: a case body 910 forming a space 911 in which the wearable electronic device 800 can be accommodated; and a contact pad 920 formed in the case body 910 and configured to electrically contact the first terminal 840 and the second terminal 850 when the wearable electronic device 800 is accommodated in the case 900, wherein the charge controller 830 is configured to, when the wearable electronic device 800 is not accommodated in the case 900, charge the battery 820 through a first charging path CP7_b and when the wearable electronic device 800 is accommodated in the case 900, charge the battery 820 through a second charging path CP8_b that is different from the first charging path CP7_b.

In a seventeenth example, the charging system 700 of the sixteenth example is provided, wherein a total resistance of the second charging path CP8_b is less than a total resistance of the first charging path CP7_b.

In an eighteenth example, the charging system 700 of the sixteenth or seventeenth examples is provided, wherein the second charging path CP8_b is configured to pass through the first terminal 840, the second terminal 850, and the contact pad 920.

In a nineteenth example, the charging system 700 of any of the sixteenth to eighteenth examples is provided, wherein the second charging path CP8_b is configured to bypass a printed circuit board (PCB) inside the front 811.

In a twentieth example, the charging system 700 of any of the sixteenth to nineteenth examples is provided, wherein the charge controller 830 is positioned on the first temple 812, wherein the battery 820 comprises a first battery 821 provided in the first temple 812 and a second battery 822 provided in the second temple 813, wherein the first charging path CP7_b for charging the second battery 822 is a path connected to the second battery 822 from the charge controller 830 through the first temple 812, the front 811, and the second temple 813, and wherein the second charging path CP8_b for charging the second battery 822 is a path connected to the second battery 822 from the charge controller 830 through the first temple 812, the first terminal 840, the contact pad 920, the second terminal 850, and the second temple 813.

## Claims

1. A wearable electronic device (400) comprising:
a housing (410) comprising:
a front (411) to which at least one lens is connected;
a first temple (412) rotatably connected to a first side of the front (411); and
a second temple (413) rotatably connected to a second side of the front (411);
a first battery (421) in the first temple (412);
a second battery (422) in the second temple (413);
a charge controller (430)positioned on the first temple (412) and configured to control charging of the first battery (421) and the second battery (422);
a first terminal (440) positioned on the first temple (412); and
a second terminal (450) positioned on the second temple (413), wherein when the first temple (412) and the second temple (413) are folded relative to the front (411), the second terminal (450) is configured to electrically contact the first terminal (440),
wherein the charge controller (430) is configured to, when the first temple (412) and the second temple (413) are unfolded relative to the front (411), charge the second battery (422) through a first charging path (CP1_b), and when the first temple (412) and the second temple (413) are folded relative to the front (411), charge the second battery (422) through a second charging path (CP2_b) that is shorter than the first charging path (CP1_b) so that the second charging path (CP2_b) bypasses one or more components included in the first charging path (CP1_b),
wherein the first charging path (CP1_b) for charging the second battery (422) is a path connected to the second battery (422) from the charge controller (430) through the first temple (412), the front (411), and the second temple (413), and
wherein the second charging path (CP2_b) for charging the second battery (422) is a path connected to the second battery (422) from the charge controller (430) through the first temple (412), the first terminal (440), the second terminal (450), and the second temple (413).

2. The wearable electronic device (400) of claim 1, wherein a total resistance of the second charging path (CP2_b) is less than a total resistance of the first charging path (CP1_b).

3. The wearable electronic device (400) of claim 1 or 2, wherein the second charging path (CP2_b) is configured to bypass a printed circuit board (463) positioned inside the front (411).

4. The wearable electronic device (400) of claim 1, further comprising:
a switch circuit (491) or (492) configured to selectively connect to the first charging path (CP1_b) or the second charging path (CP2_b).

5. The wearable electronic device (400) of claim 4, wherein the charge controller (430) is configured to control the switch circuit (491) or (492) to connect to the second charging path (CP2_b) only when an external power source is connected to the wearable electronic device (400) and the first temple (412) and the second temple (413) are folded relative to the front (411).

6. The wearable electronic device (400) of claim 4 or 5, wherein, when the first temple (412) or the second temple (413) is unfolded relative to the front (411) while charging the second battery (422) through the second charging path (CP2_b), the charge controller (430) is configured to control the switch circuit (491) or (492) to connect to the first charging path (CP1_b).

## Patentansprüche

1. Tragbare elektronische Vorrichtung (400), umfassend:
ein Gehäuse (410) umfassend:
eine Vorderseite (411), mit welcher zumindest ein Brillenglas verbunden ist;
einen ersten Bügel (412), der drehbar mit einer ersten Seite der Vorderseite (411) verbunden ist; und
einen zweiten Bügel (413), der drehbar mit einer zweiten Seite der Vorderseite (411) verbunden ist;
eine erste Batterie (421) in dem ersten Bügel (412);
eine zweite Batterie (422) in dem zweiten Bügel (413);
eine Ladesteuervorrichtung (430), die an dem ersten Bügel (412) positioniert und konfiguriert ist, das Laden der ersten Batterie (421) und der zweiten Batterie (422) zu steuern;
einen ersten Anschluss (440), der an dem ersten Bügel (412) positioniert ist; und
einen zweiten Anschluss (450), der an dem zweiten Bügel (413) positioniert ist, wobei, wenn der erste Bügel (412) und der zweite Bügel (413) relativ zu der Vorderseite (411) geklappt sind, der zweite Anschluss (450) konfiguriert ist, um den ersten Anschluss (440) elektrisch zu kontaktieren,
wobei die Ladesteuervorrichtung (430) konfiguriert ist, um, wenn der erste Bügel (412) und der zweite Bügel (413) relativ zu der Vorderseite (411) ausgeklappt sind, die zweite Batterie (422) über einen ersten Ladepfad (CP1_b) zu laden,
und wenn der erste Bügel (412) und der zweite Bügel (413) relativ zu der Vorderseite (411) geklappt sind, Aufladen der zweiten Batterie (422) über einen zweiten Ladepfad (CP2_b), der kürzer als der erste Ladepfad (CP1_b) ist, sodass der zweite Ladepfad (CP2_b) einen oder mehrere im ersten Ladepfad (CP1_b) enthaltene Komponenten umgeht,
wobei der erste Ladepfad (CP1_b) zum Laden der zweiten Batterie (422) ein Pfad ist, der mit der zweiten Batterie (422) von der Ladesteuervorrichtung (430) durch den ersten Bügel (412), die Vorderseite (411) und den zweiten Bügel (413) verbunden ist, und
wobei der zweite Ladepfad (CP2_b) zum Laden der zweiten Batterie (422) ein Pfad ist, der mit der zweiten Batterie (422) von der Ladesteuervorrichtung (430) durch den ersten Bügel (412), den ersten Anschluss (440), den zweiten Anschluss (450) und den zweiten Bügel (413) verbunden ist.

2. Tragbare elektronische Vorrichtung (400) nach Anspruch 1, wobei ein Gesamtwiderstand des zweiten Ladepfads (CP2_b) kleiner als ein Gesamtwiderstand des ersten Ladepfads (CP1_b) ist.

3. Tragbare elektronische Vorrichtung (400) nach Anspruch 1 oder 2, wobei der zweite Ladepfad (CP2_b) konfiguriert ist, um eine Leiterplatte (463) zu umgehen, die innerhalb der Vorderseite (411) positioniert ist.

4. Tragbare elektronische Vorrichtung (400) nach Anspruch 1, die ferner Folgendes umfasst: einen Schaltkreis (491) oder (492), der konfiguriert ist, sich selektiv mit dem ersten Ladepfad (CP1_b) oder dem zweiten Ladepfad (CP2_b) zu verbinden.

5. Tragbare elektronische Vorrichtung (400) nach Anspruch 4, wobei die Ladesteuervorrichtung (430) konfiguriert ist, um den Schaltkreis (491) oder (492) zu steuern, um sich mit dem zweiten Ladepfad (CP2_b) nur zu verbinden, wenn eine externe Stromquelle mit der tragbaren elektronischen Vorrichtung (400) verbunden ist und der erste Bügel (412) und der zweite Bügel (413) relativ zu der Vorderseite (411) geklappt sind.

6. Tragbare elektronische Vorrichtung (400) nach Anspruch 4 oder 5, wobei, wenn der erste Bügel (412) oder der zweite Bügel (413) relativ zu der Vorderseite (411) ausgeklappt ist, während die zweite Batterie (422) über den zweiten Ladepfad (CP2_b) geladen wird, die Ladesteuervorrichtung (430) konfiguriert ist, um den Schaltkreis (491) oder (492) zu steuern, um sich mit dem ersten Ladepfad (CP1_b) zu verbinden.

## Revendications

1. Dispositif électronique pouvant être porté (400) comprenant :
un boîtier (410) comprenant :
un avant (411) auquel au moins une lentille est connectée ;
une première branche (412) reliée de manière rotative à un premier côté de l'avant (411) ; et
une seconde branche (413) reliée de manière rotative à un second côté de l'avant (411) ;
une première batterie (421) dans la première branche (412) ;
une seconde batterie (422) dans la seconde branche (413) ;
un contrôleur de charge (430) positionné sur la première branche (412) et configuré pour commander la charge de la première batterie (421) et de la seconde batterie (422) ;
une première borne (440) positionnée sur la première branche (412) ; et
une seconde borne (450) positionnée sur la seconde branche (413), dans lequel lorsque la première branche (412) et la seconde branche (413) sont pliées par rapport à l'avant (411), la seconde borne (450) est configurée pour être électriquement en contact avec la première borne (440),
dans lequel le contrôleur de charge (430) est configuré pour, lorsque la première branche (412) et la seconde branche (413) sont dépliées par rapport à l'avant (411), charger la seconde batterie (422) via un premier trajet de charge (CP1_b), et lorsque la première branche (412) et la seconde branche (413) sont pliées par rapport à l'avant (411), charger la seconde batterie (422) via un second trajet de charge (CP2_b) qui est plus court que le premier trajet de charge (CP1_b) de sorte que le second trajet de charge (CP2_b) contourne un ou plusieurs composants compris dans le premier trajet de charge (CP1_b),
dans lequel le premier trajet de charge (CP1_b) permettant de charger la seconde batterie (422) est un trajet connecté à la seconde batterie (422) depuis le contrôleur de charge (430) via la première branche (412), l'avant (411) et la seconde branche (413), et
dans lequel le second trajet de charge (CP2_b) permettant de charger la seconde batterie (422) est un trajet connecté à la seconde batterie (422) depuis le contrôleur de charge (430) via la première branche (412), la première borne (440), la seconde borne (450) et la seconde branche (413).

2. Dispositif électronique pouvant être porté (400) selon la revendication 1, dans lequel une résistance totale du second trajet de charge (CP2_b) est inférieure à une résistance totale du premier trajet de charge (CP1_b).

3. Dispositif électronique pouvant être porté (400) selon la revendication 1 ou 2, dans lequel le second trajet de charge (CP2_b) est configuré pour contourner une carte de circuit imprimé (463) positionnée à l'intérieur de l'avant (411).

4. Dispositif électronique pouvant être porté (400) selon la revendication 1, comprenant en outre :
un circuit de commutation (491) ou (492) configuré pour se connecter sélectivement au premier trajet de charge (CP1_b) ou au second trajet de charge (CP2_b).

5. Dispositif électronique pouvant être porté (400) selon la revendication 4, dans lequel le contrôleur de charge (430) est configuré pour commander au circuit de commutation (491) ou (492) de se connecter au second trajet de charge (CP2_b) uniquement lorsqu'une source d'alimentation externe est connectée au dispositif électronique pouvant être porté (400) et que la première branche (412) et la seconde branche (413) sont pliées par rapport à l'avant (411).

6. Dispositif électronique pouvant être porté (400) selon la revendication 4 ou 5, dans lequel, lorsque la première branche (412) ou la seconde branche (413) est dépliée par rapport à l'avant (411) pendant le chargement de la seconde batterie (422) via le second trajet de charge (CP2_b),
le contrôleur de charge (430) est configuré pour commander au circuit de commutation (491) ou (492) de se connecter au premier trajet de charge (CP1_b).
